# EUROPEAN PATENT SPECIFICATION

(11) **EP 0 688 986 B1**
(45) Date of publication and mention of the grant of the patent: **15.09.1999**
(21) Application number: 95109383.0
(22) Date of filing: 16.06.1995
(51) Int. Cl.: F16K 11/085, B60H 1/00

(54) **Flow control valve and hot-water type heater apparatus employing the same**
Durchflussregelventil und Heisswassererhitzer der dieses Ventil verwendet
Robinet de régulation de débit et appareil de chauffage d'eau chaude utilisant ce robinet

(30) Priority: 17.06.1994 JP 13528294; 08.07.1994 JP 15692394; 14.03.1995 JP 5410995
(43) Date of publication of application: 27.12.1995
(73) Proprietor: DENSO CORPORATION, Kariya-City Aichi-Pref. 448 (JP)
(72) Inventor: Inoue, Yoshimitsu, Toyoake-city, Aichi-pref (JP); Ito, Koichi, Kariya-city, Aichi-pref. (JP); Aoki, Shinji, Kariya-city, Aichi-pref. (JP); Nonoyama, Hiroshi, Toyota-city, Aichi-pref (JP); Sugi, Hikaru, Nagoya-city, Aichi-pref (JP); Okumura, Yoshihiko, Kariya-city, Aichi-pref (JP)
(74) Representative: Klingseisen, Franz, Dipl.-Ing.

(56) References cited:
- DE-A- 1 775 096
- FR-A- 2 176 243
- FR-A- 2 271 470
- US-A- 3 966 119

## Description

The present invention relates to a flow control valve according to the preambles of claims 1 and 22 and to a heating apparatus according to the preambles of claims 14 and 23.

DE-A-1 775 096 discloses a heating device comprising a flow control valve, a boiler, a hot water circuit, a pump and a radiator as well as a heat exchanger. The control valve comprises valves attached to both ends of a rod which integrally rotate with the shaft, wherein each of the ports of the control valve is selectively opened or closed. By switching positions of the control valve a kitchen or a bath can be heated by the heat exchanger or a compartment by the radiator.

As a method of controlling the temperature of blown air of an automotive air-conditioning apparatus including a hot-water type heater apparatus, the technique of controlling hot water flow to a heat exchanger for heater use and of controlling a blown air temperature is known. This hot water flow control method has the following advantages in comparison with an air-mix method of controlling a blown air temperature which controls a mixing ratio of chilled air and warmed air by an air-mix damper.

With the hot-water flow control method, space for mixing chilled air and warmed air is not required, and so the volume of the air-duct system can be decreased by a corresponding amount, and there are also other advantages such as the ability to alleviate air resistance by eliminating the mixing space and the ability to reduce blower electrical power and wind noise.

Japanese Patent Application Laid-Open No. Sho. 64-145472 discloses a control valve for controlling hot-water flow by the foregoing hot-water flow control method. This device includes a hot water inlet into which hot water flows from an engine, a hot-water outlet through which hot water flows out toward a heat exchanger for heater use, and a bypass outlet through which hot water to flows out toward a bypass circuit of the heat exchanger for heater use in a hot water flow control valve housing.

Accordingly, a tubular needle valve to control hot water flow to the hot water outlet and the bypass outlet is disposed rotatably within the valve housing, and along with this, a pressure-responsive valve which is opened by a rise in hot water pressure is provided in the bypass circuit. When engine speed rises and hot water pressure rises, the pressure-responsive valve opens and hot water flows into the bypass circuit side as well, by which an excessive increase in hot water flow to the hot water outlet is prevented.

In this way, occurrence of unpleasant flow noise in the passage restricting portion of the needle valve portion is prevented by preventing an excessive increase of hot water flow to the hot water outlet.

A hot-water type heater apparatus has a characteristic of a sudden rise in blown-air temperature in a minute-flow region of hot water, as is known from the heat-radiating characteristics of a heat exchanger for heater use, and so if the minute-flow region of hot water is not controlled with accuracy, it becomes impossible to control blow-air temperature as desired, producing a fatal defect in practical use.

Nevertheless, the foregoing prior art device only controls an opening surface area of a hot-water outlet simply using a needle valve, and so in order to control minute flow it becomes necessary to form an opening portion of minute surface area in a portion of the control passages formed in the needle valve.

However, this minute opening portion is not only difficult to machine, but foreign matter such as casting sand contained in the hot water may clog the minute opening portion during minute flow control, thereby producing a state wherein minute flow cannot be controlled. Additionally, because hot water flow at the minute opening portion is restricted suddenly, the differential pressure between the areas before and after the minute opening portion becomes large, and there is also a problem of increased production of flow noise.

In light of the foregoing problems, it is an object of the present invention to provide superior control of minute hot water flow in n a needle valve without formation of a minute opening portion.

This object is achieved by the features defined in claims 1 and 14, resp. 22 and 23.

In a first aspect there is provided a flow control valve to control hot-water flow supplied from a hot-water supply source to a heat exchanger for heater use, comprising a valve housing; a hot-water inlet disposed on this valve housing and communicating with a hot-water discharge side of the hot-water supply source or a hot-water outlet side of the heat exchanger for heater use; a hot-water outlet disposed on the valve housing and communicating with a hot-water inlet side of the heat exchanger or a hot-water intake side of the hot-water supply source; an opening for bypass use disposed on the valve housing and communicating with an inlet side or an outlet side of a bypass circuit of the heat exchanger; a needle valve installed within the valve housing capable of regulating an opening surface area of the hot-water inlet, the hot-water outlet, and the opening for bypass use; and a needle-valve operating device to operate this needle valve; wherein the needle valve is structured to, at one end of an operating range thereof, restrict an opening surface area of the hot water inlet and the hot-water outlet both to a small area, and also to open the opening for bypass use with an opening area which is sufficiently larger than the small area with respect to a hot water passage between the hot water inlet and the hot water outlet; and further, the needle valve is structured so that as operating flow of the needle valve increases from one end of an operating range thereof to another end, an opening surface area of the hot water inlet and the hot water outlet both enlarge, and also the opening for bypass use with an opening area gradually diminishes with respect to a hot water passage between the hot water inlet and the hot water outlet.

There is provided a hot-water heater apparatus comprising a hot-water supply source; a heat exchanger for heater use to exchange heat between hot water supplied from this hot water supply source and air to perform heating of a room interior; a flow control valve to control hot water flow supplied from the hot water supply source to the heat exchanger; and a bypass circuit bypassing the heat exchanger, the flow control valve further comprising a valve housing; a hot-water inlet disposed on this valve housing and communicating with a hot water discharge side of the hot water supply source or a hot water outlet side of the heat exchanger for heater use; a hot-water outlet disposed on the valve housing and communicating with a hot water inlet side of the heat exchanger or a hot water intake side of the hot water supply source; an opening for bypass use disposed on the valve housing and communicating with an inlet side or an outlet side of the bypass circuit of the heat exchanger; a needle valve installed within the valve housing capable of regulating an opening area of the hot-water inlet, the hot-water outlet, and the opening for bypass use; and a device for operating the needle-valve to operate this needle valve, wherein the needle valve is structured to, at one end of an operating range thereof, restrict an opening surface area of the hot water inlet and the hot water outlet both to a small area, and also to open the opening for bypass use with an opening area which is sufficiently larger than the small area with respect to a hot water passage between the hot water inlet and the hot water outlet; and further the needle valve is structured so that as operating flow of the needle valve increases from one end of an operating range thereof to another end, an opening area of the hot water inlet and the hot water outlet both enlarge, and also the opening for bypass use with an opening area gradually diminishes with respect to a hot water passage between the hot water inlet and the hot water outlet.

Further there is provided a hot-water heater apparatus employed in an automobile having a water-cooled engine, comprising a heat exchanger for heater use to exchange heat between hot water supplied from the engine and air to perform heating of a passenger compartment interior; a flow control valve to control hot-water flow supplied from the engine to the heat exchanger; and a bypass circuit to cause hot water to flow, bypassing the heat exchanger; the flow control valve further comprising a valve housing; a hot-water inlet disposed on this valve housing and communicating with a hot-water discharge side of the engine or hot-water outlet side of the heat exchanger for heater use; a hot-water outlet disposed on the valve housing and communicating with a hot water inlet side of the heat exchanger or a hot water intake side of the engine;
an opening for bypass use disposed on the valve housing communicating hot water flowing in from the hot water inlet with an inlet side or an outlet side of the bypass circuit; a needle valve installed within the valve housing capable of regulating an opening surface area of the hot water inlet, the hot water outlet, and the opening for bypass use; and a device for operating the needle valve operating, wherein the needle valve is structured to, at one end of an operating range thereof, restrict an opening area of the hot water inlet and the hot water outlet both to a small surface area, and also to open the opening for bypass use with an opening area which is sufficiently larger than the small area with respect to a hot water passage between the hot water inlet and the hot water outlet; and further the needle valve is structured so that an operating amount of the needle valve increases from one end of an operating range thereof toward another end, an opening area of the hot water inlet and the hot water outlet both enlarge, and also the opening for bypass use with an opening area gradually diminishes with respect to a hot water passage between the hot water inlet and the hot water outlet.

According to another aspect, the bypass circuit is provided with a pressure-responsive valve which is opened by a rise in hot-water pressure.

Thus, a pressure-responsive valve which is opened by a rise in hot-water pressure is provided in the bypass circuit, and so even if hot water supply pressure of a hot water supply source fluctuates, the hot water pressure applied to the heat exchanger is maintained uniformly, and it is easily possible to suppress fluctuation in blown-air temperature.

According to a further aspect, the needle valve is structured as a rotor disposed rotatably within the valve housing to regulate an opening area of the hot water inlet, the hot water outlet, and the opening for bypass use by rotation of the needle valve.

According to another aspect, the needle valve is disposed reciprocatably within the valve housing and regulates an opening area of the hot water inlet, the hot water outlet, and the opening for bypass use by reciprocation of the needle valve.

According to a still further aspect, control passages are formed in the needle valve to regulate an opening surface area of the hot water inlet, the hot water outlet, and the opening for bypass use.

Preferably, the needle valve control passages are structured so that hot water flows through the opening for bypass use even at an operating position of a non-heater mode which interrupts hot-water flow to the heat exchanger.

Thus, control passages of the needle valve are structured so that hot water flows through the opening for bypass use even at an operating position of a non-heater mode which interrupts hot-water flow to the heat exchanger, and so foreign matter such as casting sand or the like can be washed away by this hot water flow, and the effect of preventing obstruction of the valve passages due to foreign matter such as casting sand or the like can be further heightened.

According to a still further aspect, a second bypass circuit which is not controlled by the flow control valve is disposed on a hot-water upstream side from the bypass circuit controlled by the flow control valve.

Preferably, the second bypass circuit has pressure-responsive valves which are opened by a rise in hot water pressure.

Further, the bypass circuit controlled by the flow control valve and the second bypass circuit preferably are both provided with pressure-responsive valves which are opened by a rise in hot water pressure.

According to another aspect, the needle valve control passages form a first restricting portion to restrict an opening surface area of the hot water inlet and a second restricting portion to restrict an opening surface area of the hot water outlet in a predetermined mutual relationship with the first restricting portion.

According to still another aspect, the bypass circuit has a first bypass circuit with a pressure-responsive valve which is opened by a rise in hot-water pressure and a second bypass circuit provided in parallel with this first bypass circuit and which is normally open.

Thus, hot-water pressure applied to the heat exchanger for heater use is maintained uniformly by the mode of operation of the pressure-responsive valve even if hot water supply pressure of a hot-water supply source fluctuates, and fluctuation in blown-air temperature can be suppressed and along with this, hot water continues to flow through a second bypass circuit which is normally open to a bypass circuit even when the pressure-responsive valve has closed, and so control of minute flow to the heat exchanger for heater use is facilitated and control characteristics of blown-air temperature can be made even more easily.

According to another aspect, the pressure-responsive valve has housings having an inlet and an outlet for hot water, a valve seat formed on an inner-wall surface of these housing, a needle valve to regulate a passage degree of opening of the valve seat in accordance with hot water pressure, and devices for bypass passage which normally communicate between the inlet and the outlet, bypassing the valve seat and the needle valve.

Thus, devices for bypass passage are incorporated within the pressure-responsive valve itself, and so the structure of the hot-water type heater apparatus can be further simplified and its cost can be reduced.

According to a still further aspect, the first restricting portion is structured so that an opening area with the hot-water inlet is substantially uniform when an operating amount of the needle valve increases by a predetermined amount from one end of an operating range thereof toward another end and thereafter an opening area with the hot-water inlet increases as the needle valve operating amount increases, whereas the second restricting portion is structured so that the needle valve is open to the hot water outlet when there has been a minute amount of operation from one end of the operating range, and along with increase of the needle valve operating amount thereafter, an opening area with the hot water outlet increases.

Thus, in the control passages of the needle valve a first restricting portion to restrict an opening surface area of the hot water type inlet and a second restricting portion to restrict an opening surface area of the hot water outlet are formed in a predetermined mutual relationship with the first restricting portion; in particular the first restricting portion is such that an opening area with the hot-water inlet is substantially uniform while an operating amount of the needle valve increases by a predetermined amount from one end of an operating range thereof toward another end and thereafter an opening surface area with the hot water inlet increases as the needle valve operating amount increases as the needle valve operating amount increases, and so characteristics whereby the blown-air temperature is easily controlled can be obtained wherein an increase in hot water flowing into the heat exchanger during initial operation of the needle valve is suppressed, and the slope of control characteristics of blown-air temperature in a comparatively low-temperature range is flattened.

Preferably, when the needle valve has been operated in a position of another end of the operating range, an opening surface area of the first restricting portion and the hot-water inlet and an opening surface area of the second restricting portion and the hot-water outlet reach a maximum, and further the valve is structured so that an interval between the control passages having the first and second restricting portions and the opening for bypass use is obstructed.

Thus, when the needle valve has been set to a position of another end of the operating range (i.e., the maximum heating position), an opening surface area of the first restricting portion and the hot water inlet and an opening surface area of the second restricting portion and the hot water outlet reach a maximum, and further an interval between the control passages having these first and second restricting portions and the opening for bypass use is obstructed, and so hot water flow to the bypass circuit is prevented and hot water of maximum flow can be caused to flow the heat exchanger with a maximum surface opening area, and maximum heating capacity can be assured.

Because various embodiments of the present invention have the above-described features in a state where a needle valve has been operated at one end of an operating range thereof, an opening area of a hot water inlet and a hot water outlet are both restricted to a small area, and also an opening for bypass use is opened to a large opening area with respect to a hot-water passage between the hot-water inlet and the hot-water outlet, and further as an operating amount of the needle valve increases from one end of an operating range thereof toward another end, an opening area of the hot-water inlet and the hot-water outlet both enlarge, and also the opening for bypass use with an opening area gradually diminishes with respect to the hot water passage between the hot water inlet and the hot water outlet.

Consequently, to reduce a blown-air temperature of a heat exchanger, when minutely controlling hot water flow to the heat exchanger, the opening areas of the hot water inlet and hot water outlet are both restricted to a small area (i.e., a two-stage restriction), and moreover the intermediate portion of the hot water inlet and hot outlet communicates with a bypass circuit, and thereby the hot water pressure applied to the heat exchanger for heater use can be made sufficiently small.

As a result of this, favorable control of minutes flow is possible with no formation of a minute opening portion in the needle valve, and so obstruction of the valve passage due to foreign matter such as casting sand can reliably be prevented, and along with this, it is easily possible to effectively control blown-air temperature of the heat exchanger for heater use from a low-temperature range to a high-temperature range is large.

### BRIEF DESCRIPTION OF THE DRAWINGS

Other objects, features and characteristics of the present invention will be appreciated from a study of the following detailed description, the appended claims, and drawings, all of which form a part of this application. In the drawings:
FIG. 1 is a hot-water circuit diagram showing a first embodiment according to the present invention;
FIG. 2 is a sectional view indicating a position of a heat exchanger for heater use according to the present invention within an air-conditioning apparatus air duct;
FIG. 3 is a cross-sectional view of a flow control valve according to the present invention;
FIGS. 4A and 4B are a front view and a cross-sectional view taken along line IVB-IVB of an individual needle valve (rotor) of a flow control valve according to the present invention;
FIGS. 5A-5G are cross-sectional views and development diagrams of an individual needle valve (rotor) of a flow control valve according to the present invention;
FIGS. 6A and 6B are axial and longitudinal cross-sectional views, respectively, of a constant-differential pressure valve according to the present invention, FIG. 6A being a cross-section taken along line VIA-VIA of FIG. 6B;
FIG. 7 is a graph showing degree of opening characteristics of a needle valve (rotor) of a flow control valve according to the present invention;
FIG. 8 is a graph indicating a gain-reduction effect of temperature control by various flow control valves;
FIG. 9 is a chart indicating subjective flow-noise auditory feelings due to various flow control valves;
FIG. 10 is a graph showing a relationship between fluctuations in engine speed and blown-air temperature;
FIGS. 11A and 11B are cross-sectional views showing a second embodiment of a flow control valve according to the present invention; FIG. 11B being a cross-sectional view taken along line XIB-XIB of FIG. 11A;
FIG. 12 is a cross-sectional view showing a third embodiment of a flow control valve according to the present invention;
FIG. 13A is a cross-sectional view showing a fourth embodiment of a flow control valve according to the present invention, and FIG. 13B is a perspective view of a gear-mechanism portion of FIG. 13A;
FIGS. 14A and 14B are hot-water circuit diagrams indicating fifth through ninth embodiments according to the present invention;
FIG. 15 is a graph showing the degree of opening characteristics of a needle valve (rotor) of a flow control valve according to a tenth embodiment of the present invention;
FIG. 16 is a hot-water circuit diagram illustrating an eleventh embodiment according to the present invention;
FIG. 17 is a graph showing a gain-reduction effect of temperature control by a hot-water circuit according to the eleventh embodiment;
FIG. 18 is a cross-sectional view of a constant-differential pressure valve according to a twelfth embodiment of the present invention;
FIGS. 19A and 19B are axial and longitudinal cross-sectional views of a constant-differential pressure valve according to a thirteenth embodiment of the present invention, FIG. 19A being a cross-sectional view taken along line XIXA-XIXA of FIG. 19B.
FIG. 20A shows a front view of an individual needle valve (rotor) of a flow control valve according to a fourteenth embodiment of the present invention, and FIG. 20B is a schematic structural diagram of the needle valve and a valve housing of the flow control according to that embodiment;
FIGS. 21A-21H are cross-sectional views taken along line XXB-XXB of FIG. 20A and development diagrams of the needle valve of the flow control valve according to the fourteenth embodiment;
FIG. 22 is a graph showing degree of opening characteristics of a needle valve (rotor) of the flow control valve according to the fourteenth embodiment;
FIG. 23 is a graph showing control characteristics of blown-air temperature using the flow control valve according to the fourteenth embodiment;
FIG. 24 is a heat exchanger perspective view showing the temperatures indicated in the graph of FIG. 23;
FIG. 25A is a front view of an individual needle valve (rotor) of a flow control valve according to a fifteenth embodiment of the present invention, and FIG. 25B is a schematic structural diagram of the needle valve and a valve housing of the flow control valve according to the fifteenth embodiment;
FIGS. 26A-26G are cross-sectional views taken along line XXVI-XXVI of FIG. 25A, indicating the needle valve of the flow control valve according to the fifteenth embodiment, and development diagrams of the needle valve of the flow control valve according to that embodiment;
FIG. 27 is a graph showing degree of opening characteristics of a needle valve (rotor) of the flow control valve according to the fifteenth embodiment;
FIG. 28 is a graph showing control characteristics of blown-air temperature using the flow control valve according to the fifteenth embodiment;
FIGS. 29A and 29B are schematic assembly structural diagrams of a needle valve and a valve housing of a flow control valve according to a sixteenth embodiment of the present invention;
FIGS. 30A-30H are cross-sectional views taken along line XXX-XXX of FIG. 29A indicating the needle valve of the flow control valve according to the sixteenth embodiment and development diagrams of the needle valve of the flow control valve according to that embodiment;
FIG. 31A is a front view of an individual needle valve (rotor) of a flow control valve according to a seventeenth embodiment of the present invention, and FIG. 31B is a schematic structural diagram of the needle valve and a valve housing of the flow control valve according to that embodiment; and
FIGS. 32A and 32B are cross-sectional views taken along line XXXIII-XXXIII of FIG. 31A showing the needle valve of the flow control valve according to the seventeenth embodiment and development diagrams of the needle valve of the flow control valve according to that embodiment.

### DETAILED DESCRIPTION OF THE PREFERRED EMBODIMENTS

Embodiments according to the present invention will be described hereinafter with reference to the drawings.

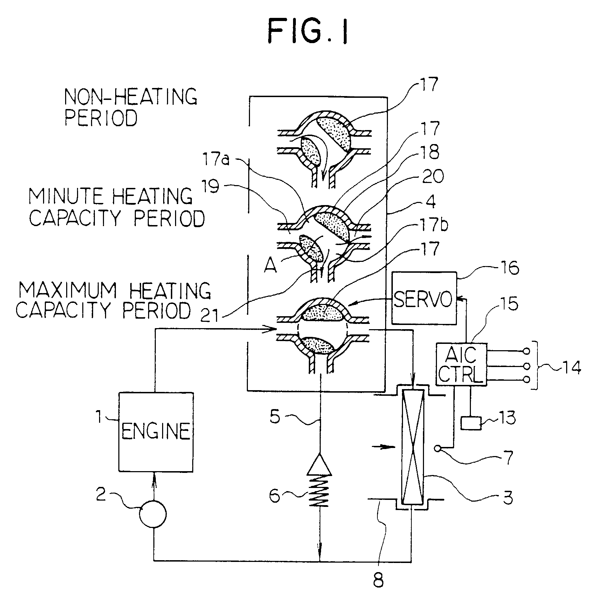

FIGS. 1 to 10 indicate a first embodiment according to the present invention, and indicate an application of the present invention in a hot-water type heater apparatus of an air-conditioning device for automotive use. Reference numeral 1 denotes a water-cooled type engine for automotive use and numeral 2 denotes a water pump driven by the engine 1 to circulate water in a coolant water circuit (hot water circuit) of the engine 1. Reference numeral 3 denotes a heat exchanger for use as a heater core to exchange heat between hot water supplied from the engine and blown air to thereby heat the blown air and numeral 4 denotes a flow control valve according to the present invention, being a three-way type flow control valve having three hot-water inlets/outlets. The structure thereof will be described in detail later.

Reference numeral 5 denotes a bypass path disposed in parallel with the heat exchanger 3, and numeral 6 denotes a constant-differential pressure valve or pressure-responsive valve which opens when the differential pressure between its sides reaches a previously established specified value, and which functions to make the inlet and outlet pressures of the heat exchanger 3 substantially equal even if the discharge pressure of the water pump 2 fluctuates due to speed fluctuation of the engine 1.

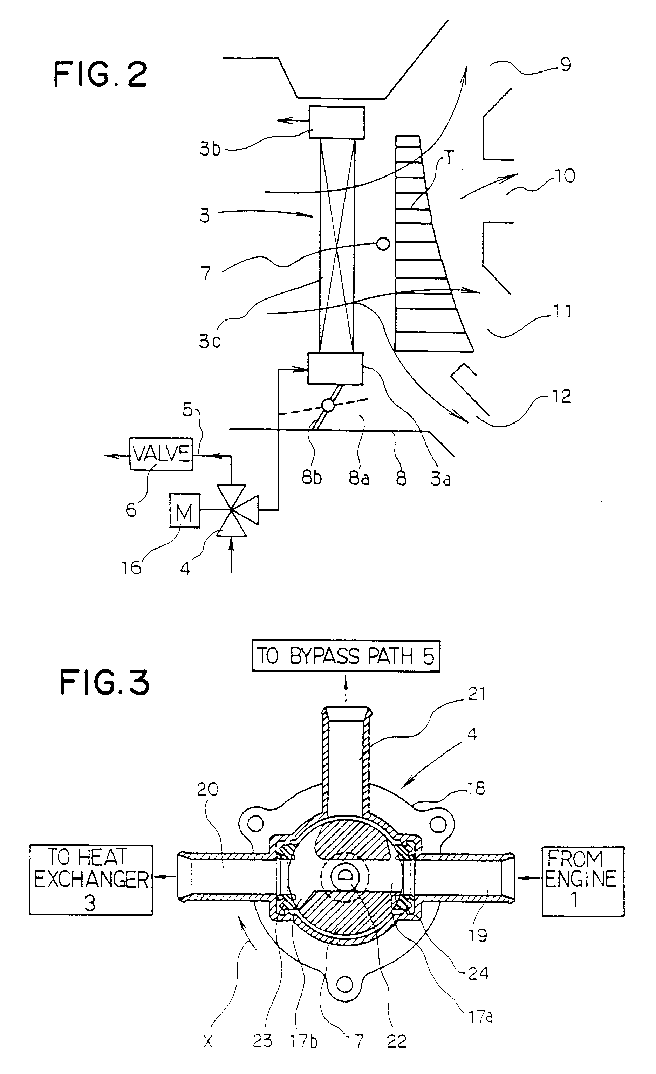

Reference numeral 7 denotes a temperature sensor installed within an air duct or heater case 8 of an automatic air-conditioning apparatus in which the heat exchanger 3 is installed (see also FIG. 2) on an air downstream side of the heat exchanger 3 and at a location immediately before a branch point of various vents 9 to 12 which lead to a passenger compartment. This temperature sensor 7 is composed of a thermistor and detects the temperature of air blown into the passenger compartment.

In FIG. 2, the vent 9 is an upper (face) vent to blow air toward a passenger's head within the passenger compartment, the vent 10 is a defroster vent to blow air at a vehicle front windshield to remove fog from the windshield, the vent 11 is a foot vent for front seat use to blow air on the feet of front seat passengers, and the vent 12 is a foot vent for the back seat use to blow air on the feet of back seat passengers.

Reference numeral 13 in FIG. 1 denotes a temperature control to set a target temperature (the desired temperature of the passenger compartment) for passenger compartment temperature control, and is composed of a switch, variable resistor, or the like which is manually operable by the passenger. Numeral 14 denotes a sensor group to detect environmental factors relating to passenger compartment temperature control of ambient temperature, hot water temperature, amount of sunlight, and the like. Numeral 15 denotes an air-conditioning controller to output temperature-control signals based on input signals from these sensors 7 and 14 and the temperature control 13 and the like, and is composed of a microcomputer or other appropriate control device.

Reference numeral 16 denotes a servomotor controlled by temperature-control signals from this air-conditioning controller 15, and rotates a needle valve 17 of the flow control valve 4. Herein, the device for valve operating is not necessarily an electrical actuator such as the servomotor 16, but may be a known manually operated mechanism employing levers, wires, and the like.

FIG. 3 shows the flow control valve 4 according to the present embodiment. The above-mentioned needle valve 17 has a substantially cylindrical configuration, is made of resin material and is disposed and housed rotatably within a valve housing 18 also formed of resin in a cylindrical configuration. Consequently, the needle valve 17 is a rotatable rotor.

A hot water inlet pipe 19 into which hot water flows from the engine 1, a hot water outlet pipe 20 which causes inflowing hot water from this hot-water inlet pipe 19 to flow out toward the heat exchanger 3, and a bypass outlet pipe 21 which causes hot water to flow out toward the bypass circuit 5 of the heat exchanger 3 are formed integrally in the foregoing valve housing 18.

Control passages 17a and 17b which control opening surface areas of the foregoing pipes 19, 20, and 21 by a predetermined mutual relationship to be described later are formed in the needle valve 17. Reference numeral 22 denotes a shaft to operate and rotate the needle valve 17, and is joined integrally to the needle valve 17. This shaft 22 protrudes from an outer portion of the valve housing 18, and is interconnected with an electrical actuator such as the previously described servomotor 16 or a manually operated mechanism employing levers, wires and the like, to rotate and operate the needle valve 17 by these devices.

Reference numerals 23 and 24 denote gaskets composed of an elastic material such as rubber, the overall configuration thereof being rectangular with an opening in the center portion, and which are arranged between an outer peripheral surface of the needle valve 17 and an inner peripheral surface of the valve housing 18. These gaskets 23 and 24 prevent hot water from flowing directly between the pipes 19, 20, and 21 and not via the control passages 17a and 17b of the needle valve 17. According to the present embodiment, two gaskets are only provided in correspondence with the hot water inlet pipe 19 and the hot water outlet pipe 20, but a gasket in correspondence with the bypass outlet pipe 21 may also be provided.

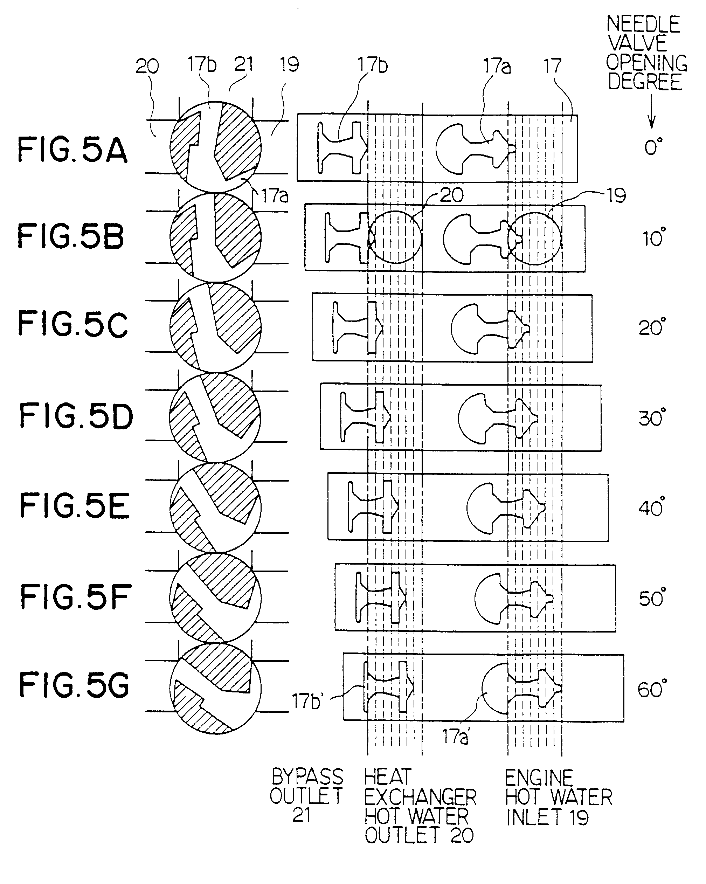

The present invention controls the opening surface areas of the pipes 19, 20, and 21 by a predetermined mutual relationship indicated in TABLE I below using the control passages 17a and 17b in accordance with the degree of opening (valve angle of rotation) of the above-mentioned needle valve 17. To realize the mutual relationship indicated in TABLE I, the concrete configurations of the control passages 17a and 17b of the foregoing needle valve 17 are formed in the configurations indicated in the development diagram of FIGS. 5A-5G.

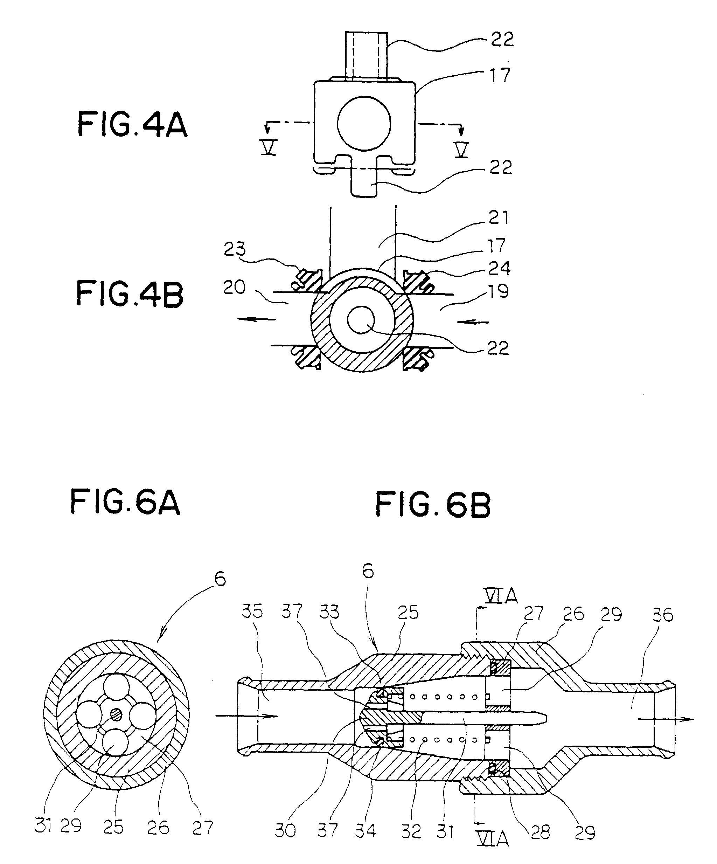

Moreover, in FIGS. 4A and 4B and in the embodiment diagram of FIGS. 5A-5G, the portion 17a' of the control passage 17a which does not oppose the hot-water inlet pipe 19 and the portion 17b' of the control passage 17b which constantly remains opposing the bypass outlet pipe 21 are only provided for reasons of resin formation of the needle valve 17, and are not required in the functioning of the needle valve 17.

In TABLE I, the following points exist as characteristic matters to be given caution.

1) During non-heating (which becomes the time of maximum

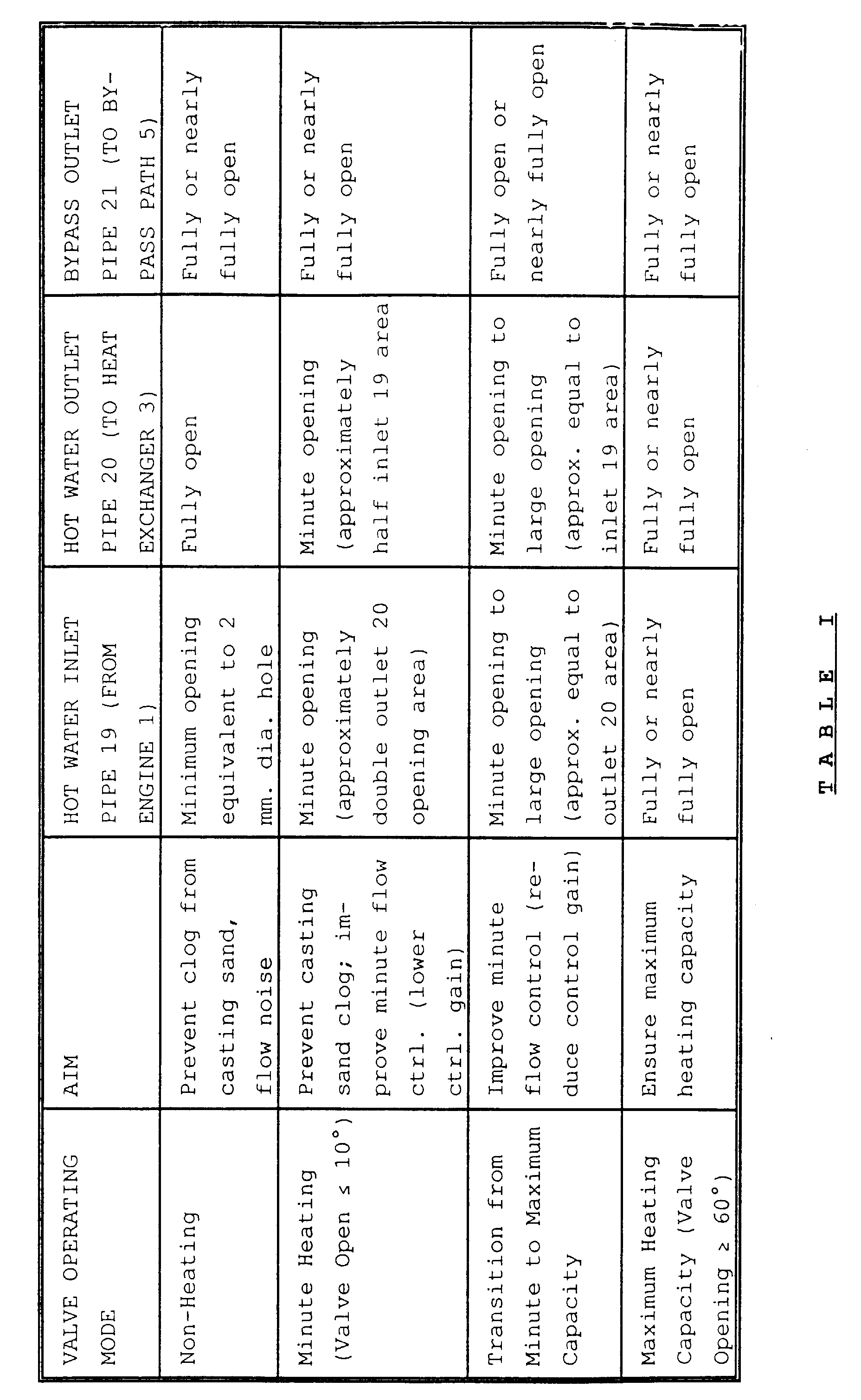

cooling when the air-conditioning apparatus for automotive use is equipped with a cooling function), a minimum opening equivalent to a 2 mm. dia. round hole is provided so as to continue the flow of hot water from the hot-water inlet pipe 19 to the bypass outlet pipe 21 without making the hot-water inlet pipe 19 to open fully, and so the occurrence of noise from a water-hammer effect due to sudden interruption of the flow of hot water can be prevented, and occurrence of flow noise can also be prevented by assuring an opening surface area equivalent to a 2 mm. dia. round hole.

Additionally, because casting sand in the hot-water circuit is normally minute material of 1 mm. dia. or less, obstruction of the flow control valve passage due to foreign matter such as casting sand can adequately be prevented by establishing a minimum opening of the foregoing size.

2) During minute capacity (i.e., a valve opening degree of 10° or less; according to the present embodiment the maximum valve opening degree is 60°), the state of two-stage restriction restricting both the opening area of the hot water inlet pipe 19 and the opening area of the hot water outlet pipe 20 (the time of minute capacity of FIG. 1 indicates typically a state of two-stage restriction thereof) is obtained, and moreover the middle of the restricting portion of the hot water inlet pipe 19 and the hot water outlet pipe 20 (area A of FIG. 1) communicates with the bypass circuit 5 at an adequately large opening area by the bypass outlet pipe 21 in a fully open state, and so the differential pressure before and after the heat exchanger 3 can be made sufficiently small.

As a result of this, the change in hot-water flow (ultimately the change in the temperature of air blown into the passenger compartment) with respect to the change in degree of valve opening (needle valve angle or rotation) can be alleviated without requiring a particularly small opening area. This is reduction in control gain.

The temperature of air blown into the passenger compartment can be controlled precisely, and along with this, obstruction of the flow control valve passage due to foreign matter such as casting sand can adequately be prevented by this reduction in control gain.

Additionally, by establishing the opening area of the restricting portion of the hot-water inlet pipe 19 to be about twice the opening area of the restricting portion of the hot-water outlet pipe 20, the amount of bypass flow flowing from the hot-water inlet pipe 19 to the bypass outlet pipe 21 can be increased and the flow of foreign matter such as casting sand to the bypass outlet pipe 21 can be facilitated, and passage obstruction due to foreign matter such as casting sand can be prevented more effectively.

3) At any position from minute capacity to large capacity, control gain can be reduced and the temperature of air blown into the passenger compartment can be controlled precisely by the above-described two-stage restriction. Additionally, because danger of passage obstruction due to foreign matter such as casting sand is eliminated by the increase in the restricting portion opening area, the restricting portion opening area of the hot water inlet pipe 19 and the restricting portion opening surface area of the hot water outlet pipe 20 are established equivalently in this state.

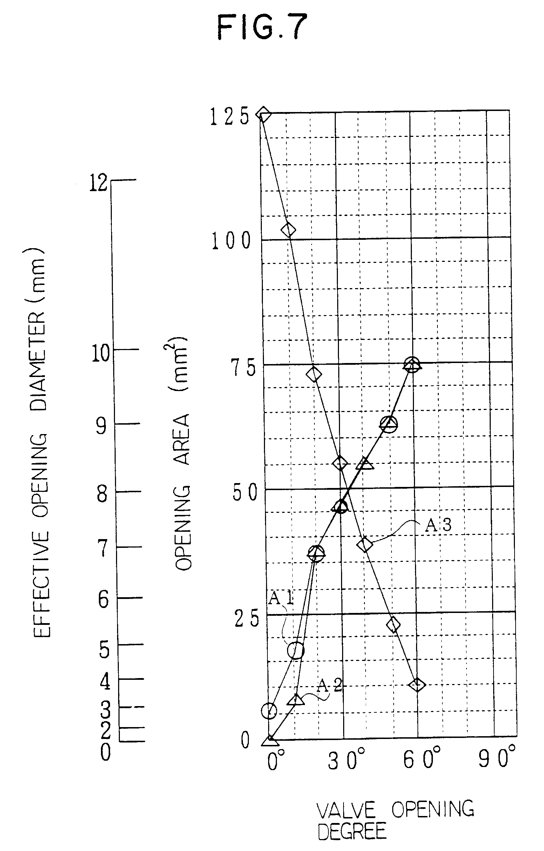

FIGS. 6A and 6B indicate a specific embodiment of the constant-differential pressure valve (pressure-responsive valve) 6 installed in the bypass circuit 5. Two housings 25 and 26 made of resin are joined by screws or the like, and a seating plate 27 made of resin is fixed watertightly between the two via an O-ring or seal member 28. A plurality of water-passage holes 29 each having a sufficiently opening surface area are provided in this seating plate 27 to make water-passage resistance due to the seating plate 27 smaller.

Reference numeral 30 denotes a needle valve of conical configuration which is mated movably axially with a center hole portion of the seating plate 27 by a shaft portion 31 made integrally therewith. A coil spring or spring device 32 is interposed between the needle valve 30 and the seating plate 27, and the needle valve 30 is constantly biased to the left-hand side of the drawing (i.e., the valve-closed direction) by this spring to contact a valve seat 33 formed on an inner periphery of the housing 25.

A ring-shaped groove is formed on an outer periphery of the conical portion of the above-described needle valve 30, and a seal member 34 composed of an elastic material such as rubber is disposed in this groove to heighten the sealing effect when the needle valve 30 is closed.

Accordingly, when a pressure differential between an inlet 35 formed in the housing 25 and an outlet 36 formed in the housing 26 reaches a predetermined valve, the differential pressure overcomes the force of the spring 32 to move the needle valve 30 to the right-hand side of the drawing so that the needle valve 30 opens. Furthermore, to assure maximum heating capacity also when the engine is idling (i.e., when engine speed is lowest), in a case where required hot-water flow is adequately obtained, it is also acceptable to provide a plurality of through-hoes (bypass holes) 37 in the conical portion of the needle valve 30 so that hot water flows through these holes 37 when the valve is closed as well.

In the above-described FIG. 2, the heat exchanger 3 has an inlet-side tank 3a of hot water at a lower portion thereof and has an outlet-side tank of hot water at an upper portion thereof; accordingly, a core portion 3c composed of a multiplicity of flat tubing and corrugated fins disposed in parallel is formed between the two upper and lower tanks 3a and 3b. Herein, the core portion 3c is structured as a unidirectional flow type in which hot water flows in only one direction from the inlet-side tank 3a to the outlet-side tank 3b.

Consequently, in a distribution of vent-air temperature thereof, the heat exchanger lower portion has the highest temperature, as shown in the temperature-width region T of FIG. 2, and the temperature of a core portion declines with proximity to the upper portion. Specifically, a blowing temperature width of 45°C at the lowermost portion and of 25°C at the uppermost portion may be produced.

In accordance with the foregoing distribution of vent-air temperature the foot vent for back seat use 12 which requires high-temperature blown-air is disposed lowermost, with the foot vent for front seat use 11, defroster vent 10, and upper vent 9 disposed sequentially upward therefrom. a bypass air passage 8a is formed between the inlet-side tank 3a of the heat exchanger 3 and the air duct 8, and a damper 8b is installed in this air passage 8. During a bi-level mode which blows conditioned air from the upper vent 9 and the lower vents 11 and 12 simultaneously, the damper 8a is opened and chilled air flows directly into the lower side of the heat exchanger 3, thereby preventing an excessive enlargement of a temperature differential between the upper and lower blown air.

Furthermore, although not illustrated, it is also acceptable to integrate the flow control valve 4, constant-differential pressure valve 6, and servomotor 16 according to the present invention with the heat exchanger prior to assembly 3, and thereafter install the integral structure of these components in the air duct or heater case 8, thus enhancing the ease of assembly and compactness of configuration of the heat-exchanger portion.

A mode of operation according to the present embodiment with the above-described structure will be described next. At a time of maximum heating capacity, the needle valve 17 of the flow control valve 4 is rotated by the servomotor 16 or a manually operated mechanism to a position of maximum opening degree (specifically, a position where the degree of valve opening is 60° ).

The control passages 17a and 17b of the needle valve 17 thereby respectively have maximum overlap with the hot water inlet pipe 19 and hot water outlet pipe 20 of the valve housing 18, and these two pipes 19 and 20 are fully opened. Meanwhile, the control passage 17b opens only slightly to the bypass outlet pipe 21, and assumes a state close to substantially fully closed.

As a result of this, substantially all hot water from the engine 1 flows into the heat exchanger 3 side, and only a minute amount of hot water flow to the bypass path 5. The heat exchanger 3 can thereby provide maximum heating capacity. At this time, the interval between the hot-water inlet pipe 19 and the hot-water outlet pipe 20 has maximum fluid flow therethrough, and so there is no danger of passage obstruction due to foreign matter such as casting sand, flow noise due to sudden restriction, or the like.

Additionally, circulating flow to a radiator for heat-radiating use of the engine 1 can be assured by making the bypass path 5 assume a substantially fully open state as described above.

Next, during non-heating (i.e., the time of maximum cooling when the air-conditioning apparatus for automotive use is equipped with a cooling function), the needle valve 17 of the flow control valve 4 is rotated by the servomotor 16 or manually operated to a position of zero degrees of opening. At this position of zero degrees of opening, the control passage 17b of the needle valve 17 overlaps the bypass outlet pipe 21, this pipe 21 is fully opened, and the hot-water outlet pipe 20 is fully closed.

Meanwhile, as shown in the uppermost portion of the development diagrams in FIGS. 5A-5G, the control passage 17a overlaps the hot-water inlet pipe 19 with only a protruding portion of a right-edge portion thereof, and establishes a minimum opening surface area equivalent to a 2 mm. dia. round hole without fully closing the hot-water inlet pipe 19.

Because the flow of hot water from the hot-water inlet pipe 19 to the bypass outlet pipe 21 can be continued by the above-described needle valve position, occurrence of noise from a water-hammer effect due to sudden interruption of the flow of hot water can be prevented, and along with this, occurrence of flow noise can also be prevented by assurance of the equivalent of a 2 mm. dia. or greater round hole.

Additionally, because casting sand in the hot-water circuit is normally minute material of 1 mm. dia. or less, obstruction of the flow control valve passage due to foreign matter such as casting sand can adequately be prevented by establishing a minimum opening of the foregoing size.

Furthermore, circulating flow to a radiator for heat-radiating use of the engine 1 can be assured by establishing the opening surface area of the hot-water inlet pipe 19 to be a minimum opening surface area equivalent to a 2 mm. dia. round hole as described above.

Next, at a time of minute heating capacity, the needle valve 17 is rotated to a valve opening degree of 10° or less indicated in FIGS. 5A-5G, and so the control passages 17a and 17b overlap both the hot-water inlet pipe 19 and the hot-water outlet pipe 20 with a small surface area, and a state of two-stage restriction (the time of minute capacity in FIG. 1 typically indicates a state of two-stage restriction thereof) which restricts both the opening area of the hot-water inlet pipe 19 and the opening area of the hot-water outlet pipe 20 is obtained, and moreover the middle portion of the restricting portion of the hot-water inlet pipe 19 and the hot-water outlet pipe 20 (area A of FIG. 1) is connected to the bypass circuit 5 via a sufficiently large opening area by the bypass outlet pipe 21 in a fully open state, and so the pressure of this middle portion A can be lowered.

As a result of this, the differential pressure between the inlet and outlet of the heat exchanger 3 can be made sufficiently small, and so the change in hot water flow (ultimately the change in the temperature of air blown into the passenger compartment) with respect to the change in degree of valve opening (needle valve angle or rotation) can be alleviated without requiring a particularly small opening area. That is to say, control gain of the blown-air temperature can be reduced.

By this reduction in control gain, the temperature of air blown into the passenger compartment can be controlled precisely, and along with this, the need to establish a particularly small opening surface area of the hot-water inlet pipe 19 and the hot-water outlet pipe 20 is eliminated, and so obstruction of the flow control valve passage due to foreign matter such as casting sand can adequately be prevented.

Additionally, by establishing the opening surface area of the restricting portion of the hot-water inlet pipe 19 to be about twice the opening surface area of the restricting portion of the hot-water outlet pipe 20, the amount of bypass flow flowing from the hot-water inlet pipe 19 to the bypass outlet pipe 21 can be increased and the flow of foreign matter such as casting sand to the bypass outlet pipe 21 can be facilitated, and foreign matter which attempts to remain in the control passage 17b forming the restricting portion of the hot-water outlet pipe 20 can also thereby be washed away by the foregoing bypass flow, and passage obstructions due to foreign matter such as casting sand can be prevented more effectively.

Next, during a transition from minute heating capacity to large heating capacity, the needle valve 17 is rotated from a rotational position exceeding a degree of valve opening of 10° as shown in FIGS. 5A-5G to a rotational position of less than 60°, but even at a needle-valve rotational position such as this, control gain can similarly be reduced and the temperature of air blown into the passenger compartment can be controlled precisely by the above-described two-stage restriction. Additionally, since the danger of passage obstruction due to foreign matter such as casting sand is eliminated by the increase in the restricting portion opening area, the opening area of the restricting portion of the hot-water inlet pipe 19 and opening area of the restricting portion of the hot-water outlet pipe 20 are substantially equal in this state.

In the engine 1 which constitutes the hot-water supply source of the above-described automotive air-conditioning apparatus, speed changes greatly in accordance with changes in travelling conditions of the automobile, and so the hot-water supply pressure from the engine 1 changes greatly according to changes in travelling conditions, and this becomes a major disturbance element with respect to hot-water flow control by the flow control valve 4 and even blown-air temperature control, but according to the present invention, fluctuation in hot-water flow due to change in hot-water supply pressure from the engine 1 is favorably eliminated by the establishment of the constant-differential pressure valve 6 connected to the bypass circuit 5.

That is to say, in the constant-differential pressure valve 6, when hot-water supply pressure from the engine 1 rises and the differential pressure between the upstream and downstream portions of the needle valve 30 becomes higher than a predetermined pressure determined by the spring 32, the needle valve 30 moves to the right in FIG. 6B to open and the clearance between the needle valve 30 and the valve seat 33 varies in accordance with the foregoing differential pressure, and the constant-differential pressure valve 6 operates to maintain a pressure differential between the inlet 35 and outlet 36 thereof at a uniform value.

The hot-water pressure applied to the heat exchanger 4 can thereby be maintained at a uniform value regardless of fluctuation in hot-water supply pressure from the engine 1, and fluctuation of hot-water flow due to change in hot-water supply pressure from the engine 1 can be prevented.

Next, to describe experimental results based on the above-described first embodiment, FIG. 7 takes opening area (mm²) and surface area equivalent to a round hole as the abscissa axis, and takes degree of valve opening as the ordinate axis. Graph trace A1 denotes restriction opening area of the hot-water inlet pipe 19, trace A2 a restriction opening area of the hot-water outlet pipe 20, and trace A3 a restriction opening area of the bypass outlet pipe 21.

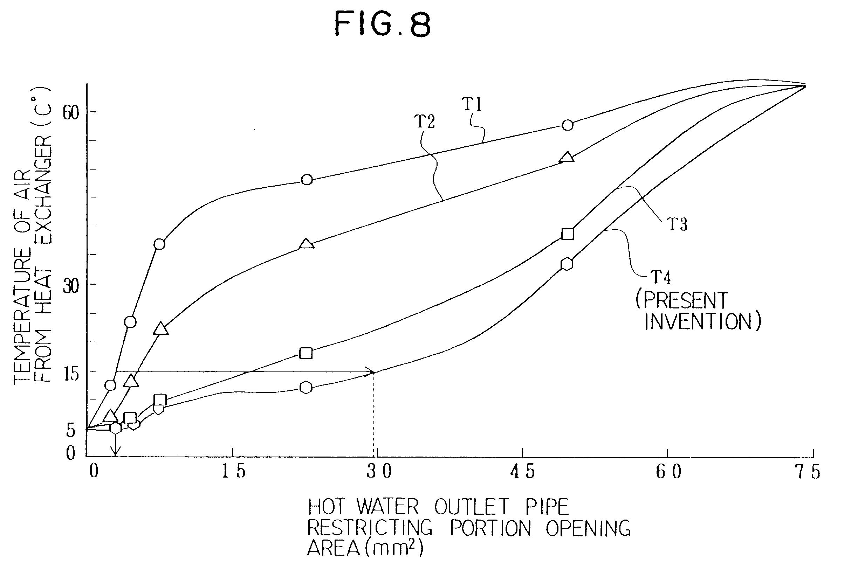

Next, FIG. 8 shows the control-gain reduction effect of temperature control according to the present invention. Blown-air temperature of the heat exchanger 3 is taken as the abscissa axis, and opening area A2 of the restricting portion of the hot water outlet pipe (i.e., the passage to the heat-exchanger inlet) is taken as the ordinate axis.

In FIG. 8, T1 is characteristic curve a in a case where a flow control valve of single-stage restriction to restrict only the passage to the hot-water outlet pipe 20 is used, T2 is characteristic curve in a case where a flow control valve of two-stage restriction to restrict the passages to both the hot-water inlet pipe 19 and the hot-water outlet pipe 20 is used, T3 is characteristic curve in a case where a flow control valve combining a bypass circuit and single-stage restriction to restrict only the passage to the hot-water outlet pipe 20 is used, and T4 is characteristic curve in a case using a flow control valve combining a bypass circuit and a two-stage restriction to restrict the passages to both the hot-water inlet pipe 19 and the hot-water outlet pipe 20.

As is understood from FIG. 8, according to the present invention, control gain can be reduced as shown by the characteristic curve 1 of T4, and so when the blown-air temperature of the heat exchanger 3 is 15°C, the opening area A2 can be expanded up to 8.8 mm² (equivalent to a 6 mm. dia. round hole). Incidentally, with a flow control valve of single-stage restriction ordinarily employed in an automotive air-conditioning apparatus, the opening surface area A2 becomes a small surface area of 3 mm² (equivalent to a 1.9 mm. dia. round hole) and the minimum temperature width (i.e., the resolution of temperature control) controllable by regulation of the valve opening degree becomes larger, and so precise temperature control becomes impossible.

Additionally, even when the blown-air temperature is 7°C, according to the present invention a size of 4.2 mm² (equivalent to a 2.3 mm. dia. round hole) can be assured for the opening surface area A2. In contrast, with an ordinary flow control valve of single-stage restriction the opening surface area A2 becomes a small surface area of 1 mm² (equivalent to a 1.9 mm. dia. round hole), and it is susceptible to passage obstruction due to foreign matter such as casting sand.

Moreover, a device according to the present invention can adequately reduce control gain of temperature control even in comparison with characteristics in a case where single-stage restriction and a bypass circuit are combined (T3).

According to the present invention, in the foregoing manner, control gain of temperature control can be adequately reduced, and so coexistence of both precise temperature control and prevention of passage obstruction due to foreign matter such as casting sand can be favorably achieved.

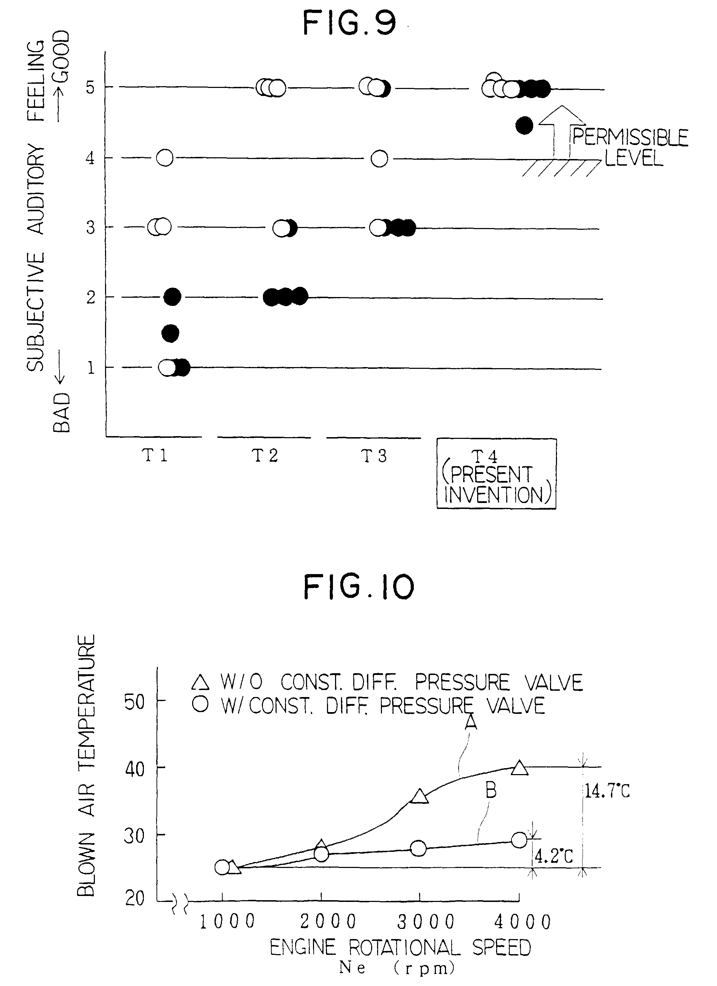

FIG. 9 shows experimental results of subjective auditory testing of flow noise generated by a flow control valve. A judgment level of auditory feeling is taken as the abscissa axis, and types of flow control valves T1 through T4 are taken as the ordinate axis. Herein, the types of flow control valves T1 through T4 are identical with T1 through T4 of the above-described FIG. 8, and T4 is a device according to the present invention.

Additionally, the subjective experimentation of flow-noise auditory feeling of FIG. 9 used a sample population of four persons, and judgment levels of auditory feeling were established as below:
1: Flow noise is extremely large and is of great concern.
2: Flow noise is large and is of concern.
3: Flow noise is small and is somewhat of concern.
4: Flow noise is extremely small and is not of concern.
5: Flow noise is absent and is not of concern.

Accordingly, experimentation into sensory evaluation was conducted at engine idle speed and at a speed of 4,000 rpm. The black circles of FIG. 9 indicate auditory feeling at 4,000 rpm, and the white circles indicate auditory feeling at idle speed.

In FIG. 9, a judgment level of 4 is taken to be a minimum permissible level, and it is understood that with the device according to the present invention, auditory feeling is at the minimum permissible level or better both at idle speed and at 4,000 rpm.

FIG. 10 shows the reduction of blown-air temperature fluctuations due to engine-speed fluctuations (i.e., hot-water supply pressure fluctuation from the engine 1) in a case where the degree of valve opening of the flow control valve establishes a blown-air temperature of 25°C, engine speed Ne fluctuated in a range of 1,000 rpm to 4,000 rpm, and the fluctuation of the heat-exchanger blown-air temperature was measured.

Trace A of FIG. 10 is a case where no constant-differential pressure valve 6 was provided in the bypass circuit 5, the above-mentioned fluctuation range is 14.7°C, but the above-mentioned fluctuation range can be suppressed to a small value of 4.2°C by providing the constant-differential pressure valve 6 in the bypass circuit 5, as shown by trace B.

In this way, according to the present invention, it is understood that fluctuation of blown-air temperature due to engine-speed fluctuation can be effectively reduced by the addition of the constant-differential pressure valve 6.

The present invention is not exclusively the above-described first embodiment, but is variously modifiable in keeping with the intentions of the technical concepts of the stated claims; other embodiments will be described hereinafter.

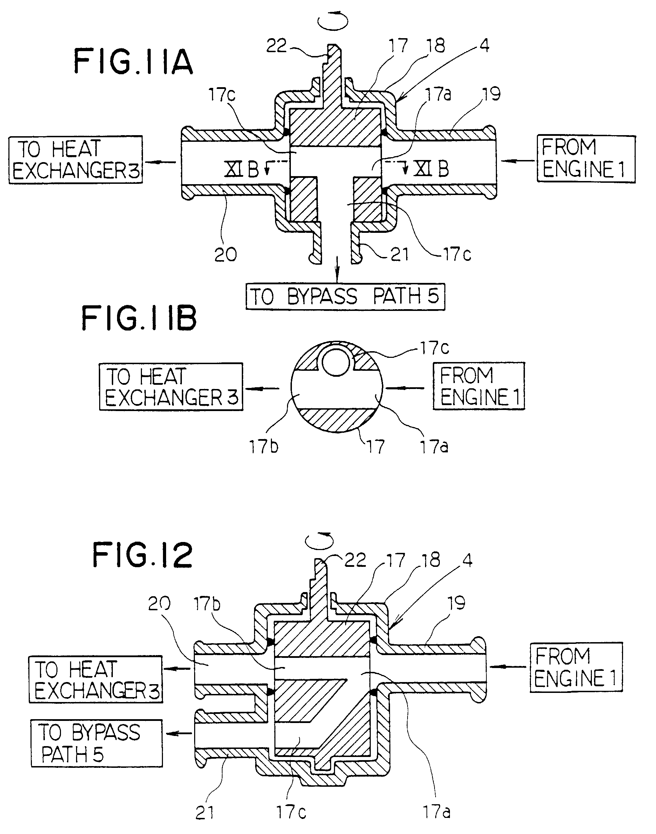

In a second embodiment of the present invention as shown in FIG. 11, whereas the hot-water inlet and outlet pipes 19 and 20 are disposed along the same horizontal axis, the bypass outlet pipe 21 is arranged skew to the above-mentioned axis. A control passage 17c for passage-opening surface-area control is additionally formed in the needle valve 17.

In a third embodiment of the present invention, the bypass outlet pipe 21 is arranged in the valve housing 18 on the same side as the hot-water outlet pipe 20 and below the hot-water outlet pipe 20 as shown in FIG. 12.

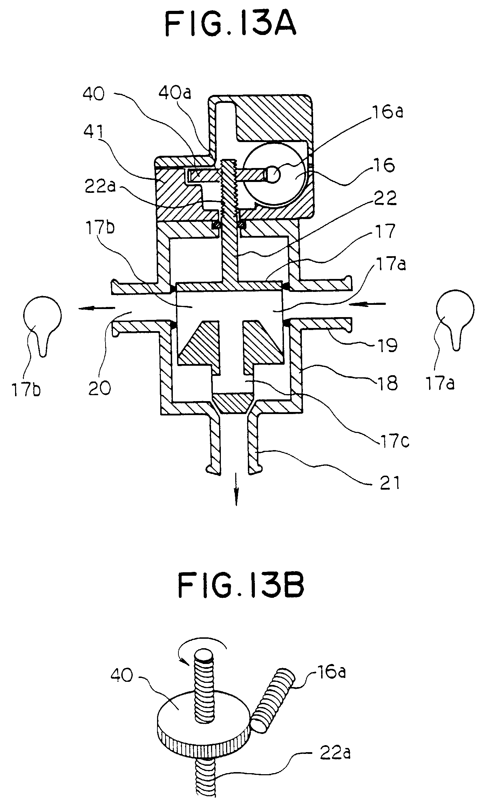

According to the foregoing first through third embodiments, the needle valve 17 is structured as a rotor or rotating type which is rotated and operated, but according to a fourth embodiment as shown in FIG. 13, the present invention can be practiced even when the valve 17 is structured as a reciprocating type valve.

That is to say, in FIG. 13A three pipes 19, 20, and 21 are disposed with respect to the valve housing 18 similarly to FIGS. 11A and 11B, and accordingly the valve 17 is housed vertically reciprocally within the housing 18.

A valve drive mechanism employing a servomotor 16 is formed integrally with the valve housing 18, and rotation of the servomotor 16 is conveyed to a spur gear 40 by a worm gear 16a on a rotating shaft. Herein, the spur gear 40 is rotatable within a drive-mechanism case 41, but does not shift in the axial direction of the needle valve 17.

Additionally, the spur gear 40 is formed with a female screw thread 40a on an inner peripheral portion thereof, and this female screw thread 40a mates with a male screw thread 22a on the shaft 22 of the needle valve 17. Consequently, the valve 17 reciprocates vertically via the mating mechanism of the worm 16a, spur gear 40, female screw thread 40a, and male screw thread 22a by rotation of the servomotor 16, and the passage opening surface area to the several pipes 19, 20, and 21 can be controlled.

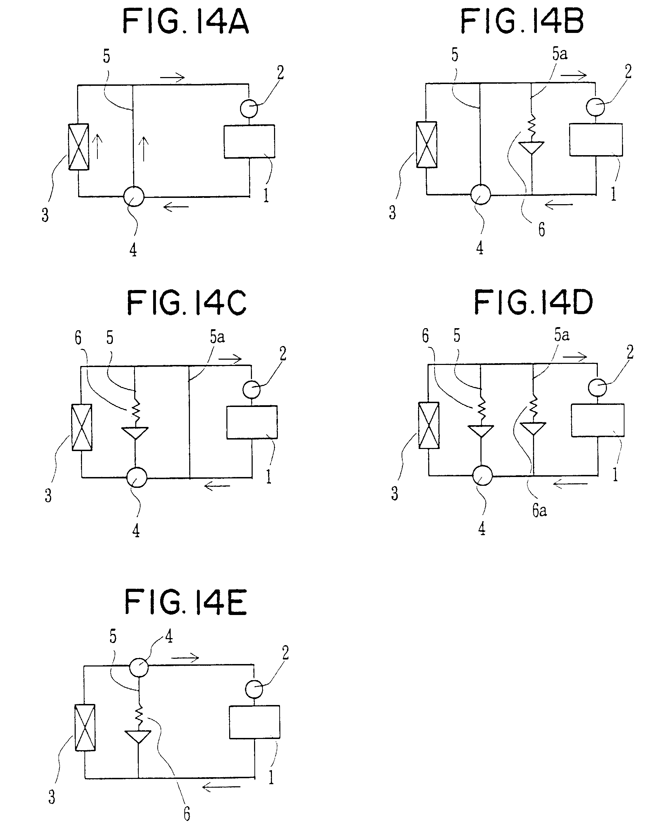

FIGS. 14A-14E show fifth through ninth embodiments relating to modifications of the hot-water circuit. FIG. 14A shows a fifth embodiment which eliminates the constant-differential pressure valve 6 from the bypass circuit 5 of FIG. 1.

FIG. 14B shows a sixth embodiment which adds, in addition to the first bypass circuit 5 for which opening and closing are controlled by the flow control valve 4, a second bypass circuit 5a for which opening and closing are not controlled by the flow control valve 4. This second bypass circuit 5a is normally connected in parallel with the engine 1, and the constant-differential pressure valve 6 is installed in the second bypass circuit 5a.

FIG. 14C shows a seventh embodiment which adds, in addition to the first bypass circuit 5 in which a constant-differential pressure valve 6 is installed, a second bypass circuit 5a for which opening and closing are not controlled by the flow control valve 4. This second bypass circuit 5a is normally connected in parallel with the engine 1.

FIG. 14D shows an eighth embodiment which adds, in addition to the first bypass circuit 5 in which a constant-differential pressure valve 6 is installed, a second bypass circuit 5a for which opening and closing are not controlled by the flow control valve 4. This second bypass circuit 5a is also installed with a constant-differential pressure valve 6a.

FIG. 14E a ninth embodiment wherein the flow control valve 4 is disposed on a hot-water outlet side of the heat exchanger 3; the hot-water inlet pipe 19 of FIG. 3 is connected to the hot-water outlet side of the heat exchanger 3, the hot-water outlet pipe 20 is connected to an intake side of the water pump 2 of the engine 1, and accordingly the bypass outlet pipe 21 becomes a bypass inlet pipe, and this bypass inlet pipe 21 is connected to an outlet side of the bypass circuit 5.

According to this ninth embodiment, if during non-heating the hot-water inlet pipe 19 is fully closed, and along with this, the hot-water outlet pipe 20 is opened with a minimum opening surface area, and accordingly the bypass inlet pipe 21 is fully opened, a mode of operation and effects similar to the first embodiment can be demonstrated.

In the various hot-water circuits indicated in the foregoing FIGS. 14A -14E, the gain-reduction effect of temperature control which is a significant advantage of the present invention, and the obstruction-prevention effect of the valve passage due to foreign matter such as casting sand, can be provided.

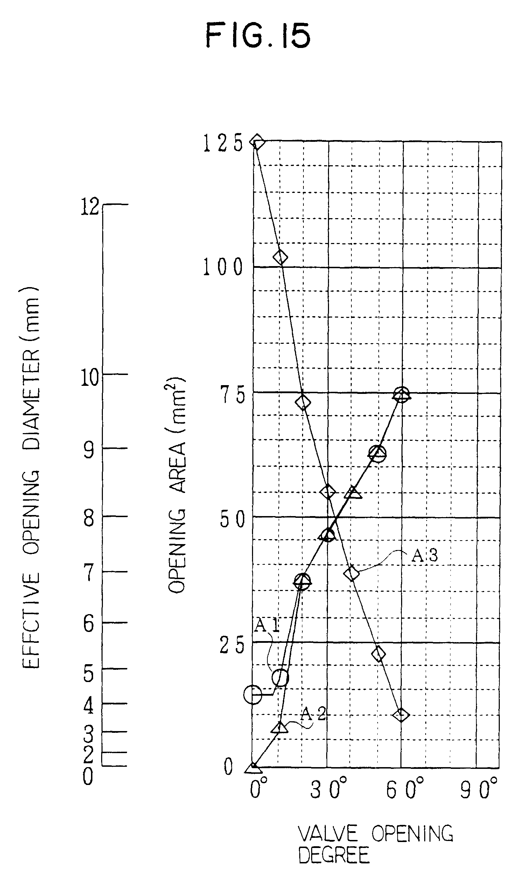

FIG. 15 is a graph indicating degree of opening characteristics of a needle valve 17 similar to the above-described FIG. 7; according to this tenth embodiment, opening area A1 of the hot-water inlet pipe 19 is maintained unchanged at a uniform value of minimum opening surface area (for example 14 mm²) for a predetermined interval from a valve degree of opening of zero (for example an interval from 0° to 8°). In this way, according to the present invention, it is possible to obtain the advantageous effects of the present invention even when maintaining the inlet opening area unchanged during a predetermined interval of needle valve opening degree without causing the respective opening areas A1, A2, and A3 to change continuously with respect to the valve degree of opening.

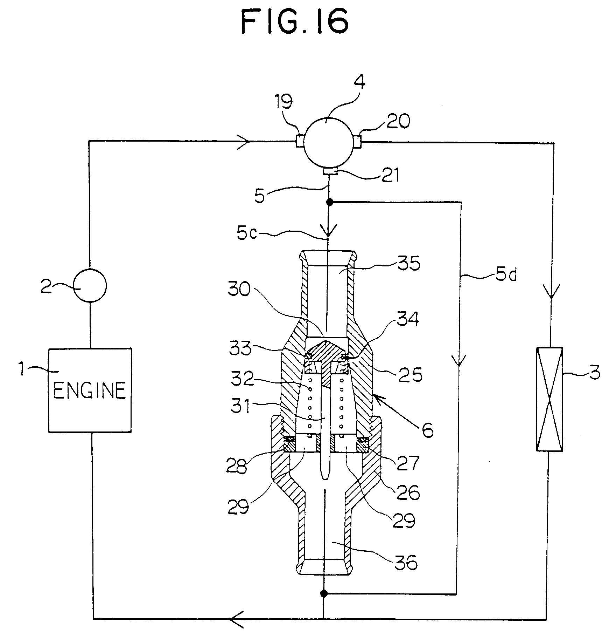

FIG. 16 discloses an embodiment providing a bypass circuit 5c having a constant-differential pressure valve or equalizing valve 6 in the bypass circuit 5 connected to the bypass outlet pipe 21 of the flow control valve 4, and also providing a constantly open bypass circuit 5d in parallel with this bypass circuit 5c.

The foregoing constant-differential pressure valve 6 abandons the bypass holes 37 in the constant-differential pressure valve 6 indicated in the above-described FIGS. 6A and 6B, and in other respects is identical to the valve shown in FIGS. 6A and 6B.

The bypass circuit 5c having the constant-differential pressure valve 6 is for absorbing fluctuations in blown-air temperature of the heat exchanger 3 based on hot-water flow fluctuations due to engine speed fluctuation, and the constantly open bypass circuit 5d is for reducing control gain of blown-air temperature control due to the flow control valve 4.

Herein, the bypass circuit 5c having the constant-differential pressure valve 6 is established so that water-passage resistance thereof becomes smaller than the water-passage resistance of the bypass circuit 5d when the constant-differential pressure valve 6 is fully open for the purpose of the foregoing objects.

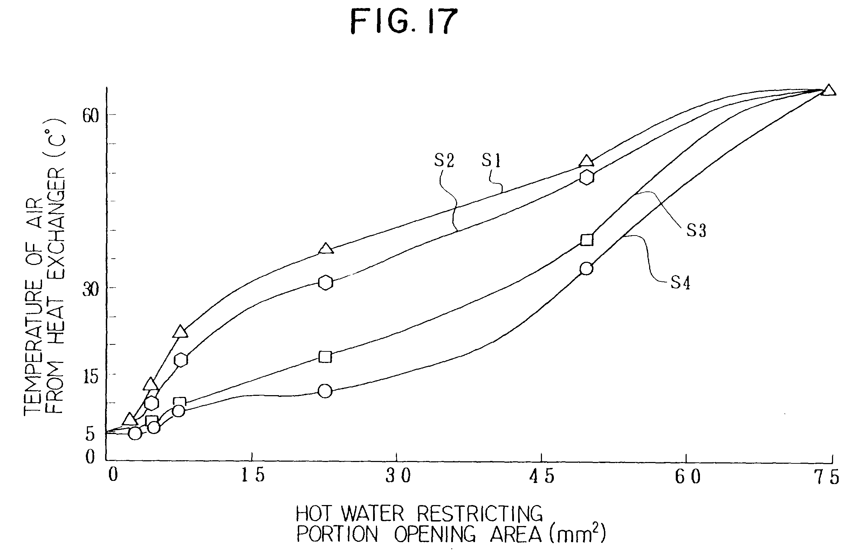

To describe the effects according to the above-described eleventh embodiment with reference to FIG. 17, the ordinate and abscissa of FIG. 17 are identical with FIG. 8, and such experimental data generated when the engine speed is 1,500 rpm.

In FIG. 17, trace S1 shows control characteristics of a comparative example eliminating the bypass circuit 5 from the hot-water circuit. Trace S2 shows control characteristics of the hot-water circuit of FIG. 1 (the first embodiment), and indicates characteristics when the constant-differential pressure valve 6 is almost closed. Trace S3 shows control characteristics according to the eleventh embodiment, and indicates characteristics when the constant-differential pressure valve 6 again is substantially closed. Trace S4 Shows control characteristics in a case where the constant-differential pressure valve 6 has been removed from the bypass circuit 5 of the hot-water circuit and the bypass circuit 5 constantly remains open. In addition, a hot-water circuit as in 4 is also included as an embodiment according to the present invention.

To examine only the object of reducing control gain of temperature control, the characteristics of S4 become the most superior, but in the case of S4, a constant-differential pressure valve 6 is not provided in the bypass circuit 5, and so the blown-air temperature characteristics indicated in the foregoing FIG. 10 become the characteristics of A with respect to fluctuations in engine speed, and fluctuations in blown-air temperature become large.

In contrast to this, in the case of S3 according to the eleventh embodiment, the characteristics of B in FIG. 10 are obtained, and fluctuations in blown-air temperature can be reduced to a minute value with respect to fluctuations in engine speed.

That is to say, according to the eleventh embodiment, reduction of control gain of temperature control and suppression of fluctuation of blown-air temperature with respect to fluctuation in engine speed can be provided simultaneously.

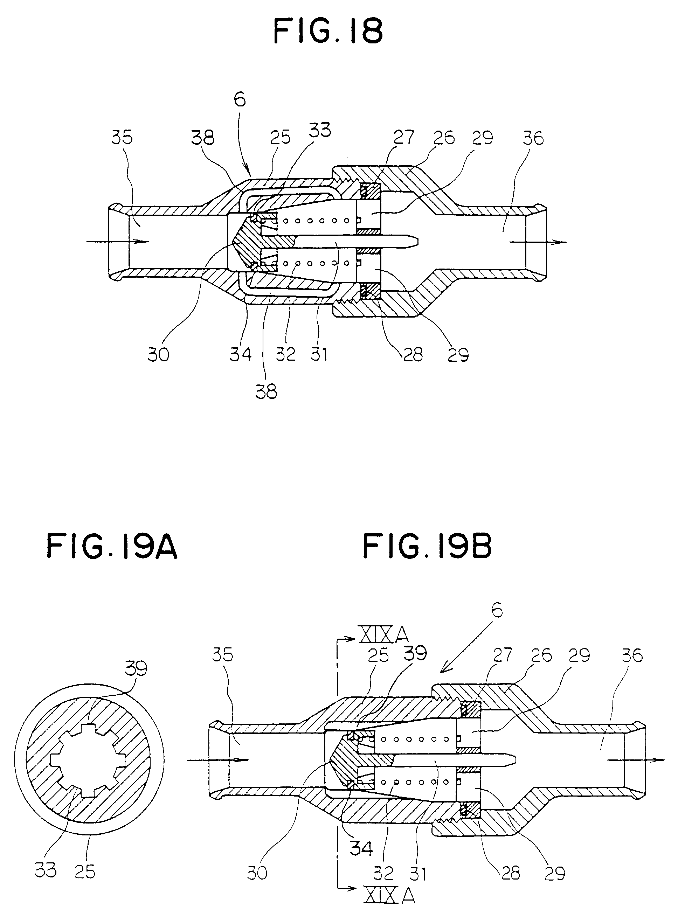

FIG. 18 shows a twelfth embodiment similar to that of the eleventh embodiment in which the functionality of the constantly open bypass circuit 5d of FIG. 17 is provided integrally in the interior of the constant-differential pressure valve 6. That is to say, a plurality of through-holes 38 to bypass the conical needle valve 30 and the valve seat 33 are formed in the housing 25.

FIGS. 19A and 19B show a thirteenth embodiment similar to that of FIG. 18 in which a plurality of slits 39 are formed circumferentially on the valve seat 33 to provide the functionality of the bypass circuit 5d.

Additionally, as in the constant-differential pressure valve 6 of FIGS. 6A and 6B, it is also acceptable to form a plurality of through-holes 37 on the conical portion of the needle valve 30 to provide the functionality of the bypass circuit 5d.

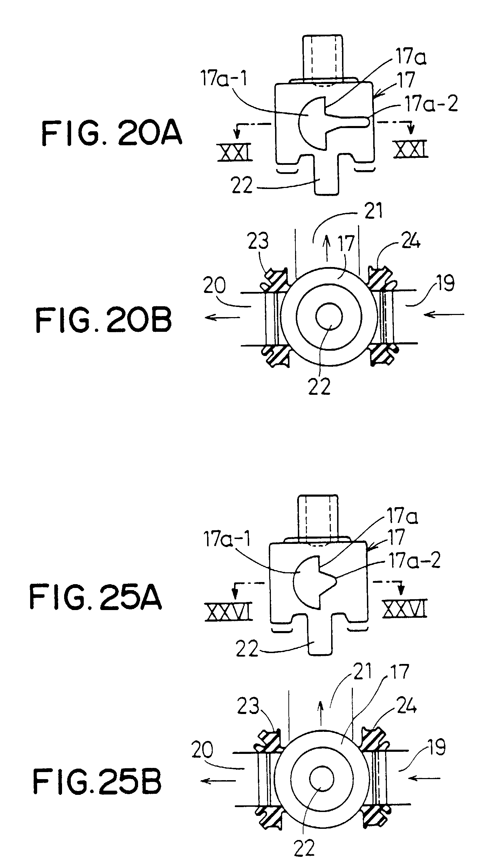

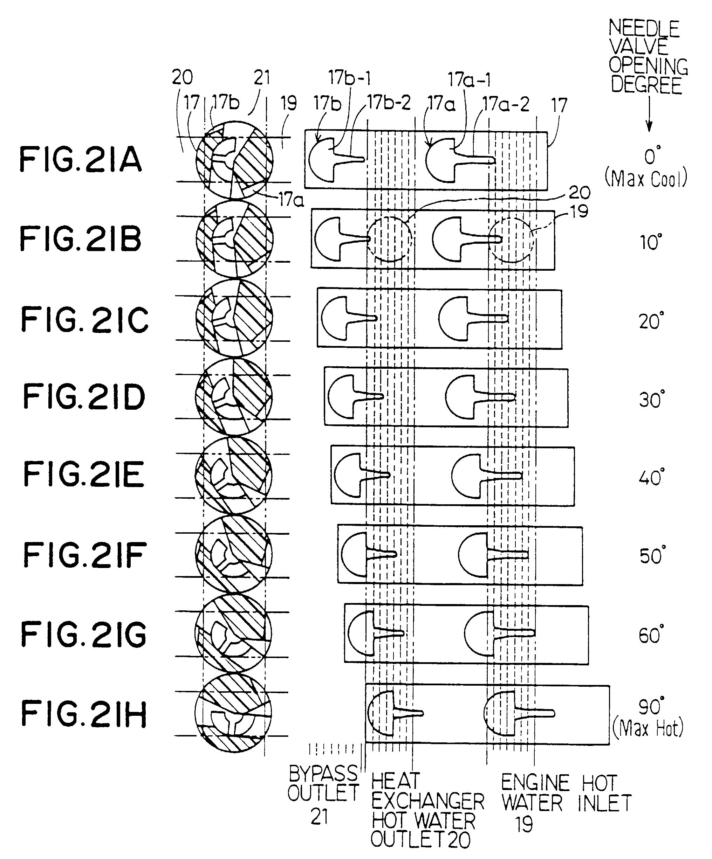

FIGS. 20A, 20B and 21A-21H illustrate a fourteenth embodiment in which the operating range of the needle valve 17 is enlarged from the 60° range of FIGS. 5A-5G to 90°, and along with this, the configurations (i.e., the opening configurations on the circumferential surface of the needle valve 17) of the control passages 17a and 17b of the needle valve 17 are made from respective semicircular portions 17a-1 and 17b-1 and narrow-length portions 17a-2 and 17b-2 joined at center portions of the chords of these semicircular portions 17a-1 and 17b-1.

These narrow-length portions 17a-2 and 17b-2 are formed so as to become narrower moving toward the tip ends thereof (i.e., toward the right-hand sides of the drawings).

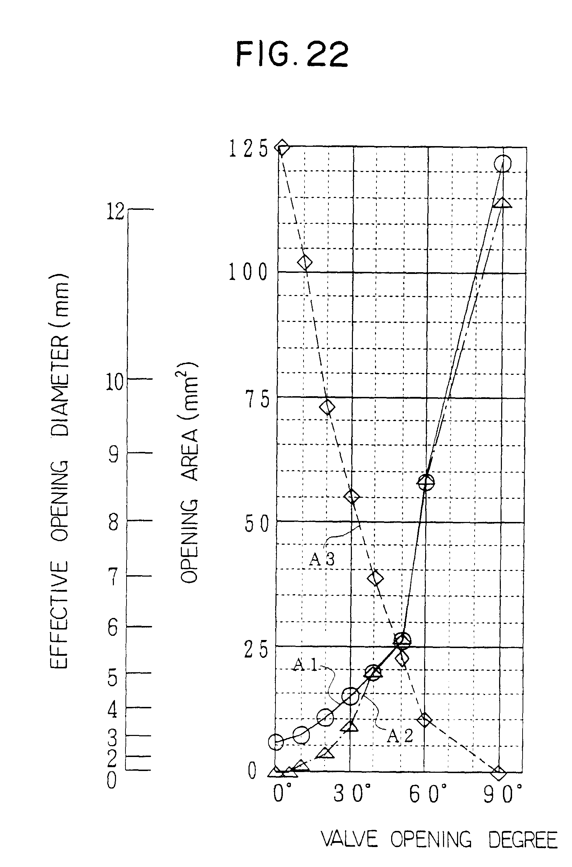

FIG. 22 indicates degree of opening characteristics of the needle valve 17 having control passages 17a and 17b with the open configuration indicated in FIG. 22, and corresponds to the above-mentioned FIGS. 8 and 16.

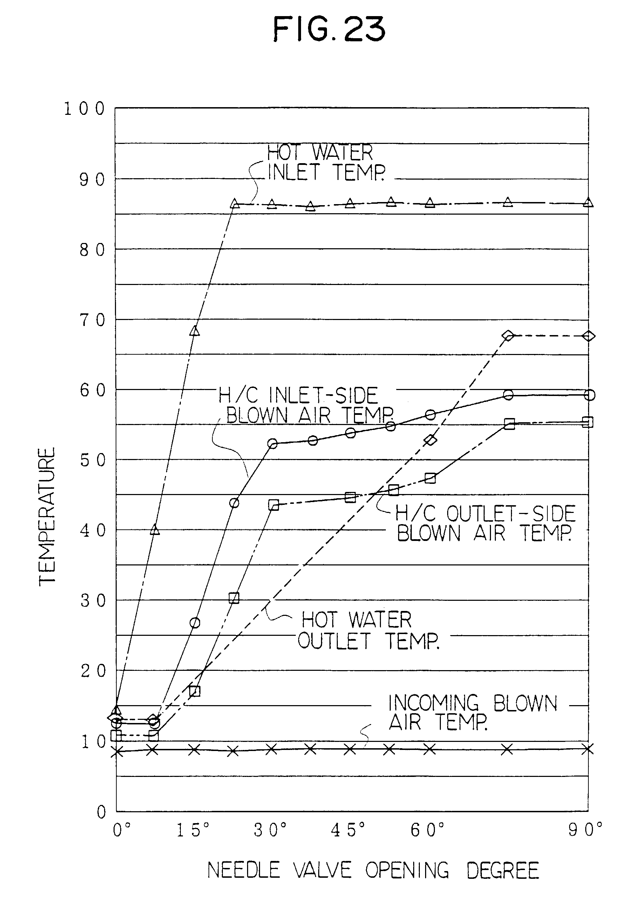

FIG. 23 indicates temperature-control characteristics of the fourteenth embodiment employing the needle valve 17 indicated in the foregoing FIGS. 20A, 20B and 21A-21H, and indicates measurements from experimentation actually performed by the inventors.

The vertical axis of FIG. 23 is taken to be the temperature (°C) of the respective areas, and the horizontal axis is taken to be the degree of opening of the needle valve 17.

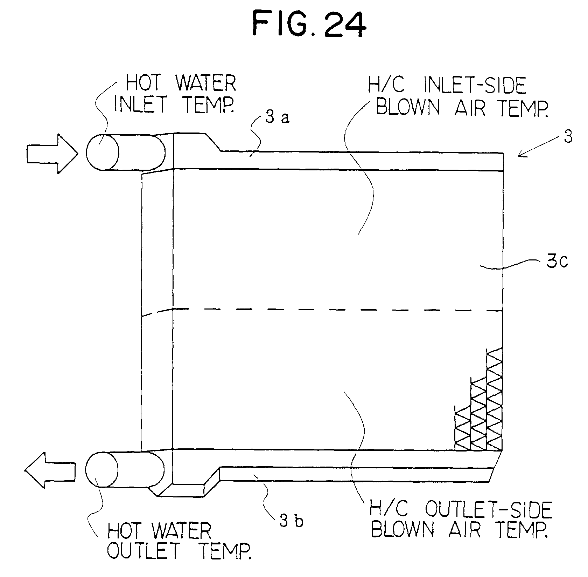

Accordingly, the hot-water inlet temperature in FIG. 23 is the temperature of hot water flowing into the hot-water inlet-side tank 3a of the heat exchanger 3, and the hot-water outlet temperature is the temperature of hot water flowing out from the hot-water outlet-side tank 3b of the heat exchanger 3. Additionally, the H/C inlet-side blown-air temperature is the blown-air temperature of the hot-water inlet-side area (i.e., the upper half of FIG. 24) at the core portion 3c of the heat exchanger for heater use 3, and the H/C outlet-side blown-air temperature is the blown-air temperature of the hot-water outlet-side area (i.e., the lower half of FIG. 24) at the core portion 3c of the heat exchanger 3.

Moreover, the blown-air temperature of FIG. 23 is the temperature of air blown to the heat exchanger 3. As is understood from the experimental results of FIG. 23, in a device according to the fourteenth embodiment, the slope of a blown-air temperature characteristic curve in the temperature-control range of 15°C to 50°C which typically utilized in automotive air-conditioning systems is comparatively high. Thus, when the slope of a characteristic curve in a temperature-control range typically utilized is high, the amount of change of blown-air temperature with respect to change in degree of opening becomes large during actual use, and accurate and stable control of passenger compartment temperature becomes difficult.

In the foregoing fourteenth embodiment, according to experimentation and research by the inventors, it has been determined that the reason why the slope of a control characteristic curve of a temperature-control range which is typically utilized becomes high is that as the degree of opening of the needle valve 17 increases from a degree of opening of zero, the restriction opening area A1 of the hot-water inlet pipe 19 and the restriction opening area A2 of the hot-water outlet pipe 20 continuously increase together (see FIG. 23), and as a result of this the amount of hot water flowing into the heat exchanger 3 increases continuously.

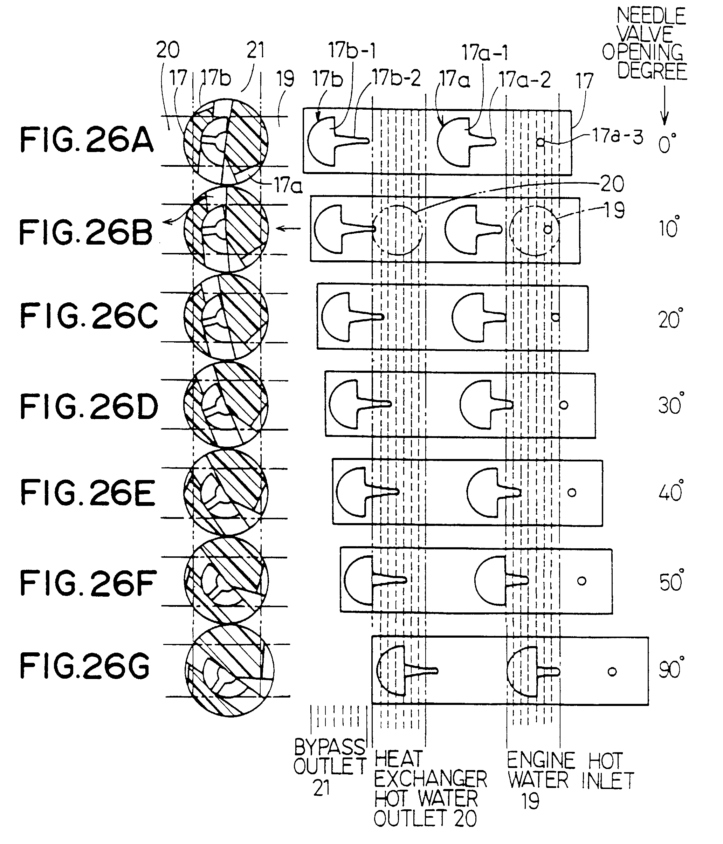

FIGS. 25A, 25B, 26A-26G, 27 and 28 illustrate a fifteenth embodiment which improves temperature-control characteristics of the fourteenth embodiment by modifying the hole configuration of the control passages 17a and 17b of the needle valve 17.

As shown in FIGS. 25A, 25B and 26A-26G, the length of the narrow-length portion 17a-2 of the control passage 17a of the needle valve 17 which opposes the hot-water inlet pipe 19 is made shorter than in the fourteenth embodiment. In specific terms, shortening is done to the extent that this narrow-length portion 17a-2 does not open to the hot-water inlet pipe 19 in a predetermined angular (degree of opening) range where the degree of opening of the needle valve 17 is from 0° to 20°.

In substitution thereof, a small hole 17a-3 of small circular configuration approximately 2mm. in diameter is provided, so that the small hole 17a-3 is the only part of the control passage 17a which opens to the hot-water inlet pipe 19 in a predetermined range of degree of opening of the needle valve 17 from zero (a range of 0° to 20° in the example of FIGS. 26A-26G). Consequently, a uniform opening surface area is maintained by the small hole 17a-3 within this predetermined range.

Accordingly, when the degree of opening of the needle valve 17 exceeds 20°, the narrow-length portion 17a-2 of the control passage 7a opens to the hot-water inlet pipe 19, and when the valve degree of opening further increases, the semicircular portion 17b-1 opens to the hot-water inlet pipe 19 so that the opening surface area increases suddenly.

Meanwhile, the control passage 17b is of identical configuration as the corresponding component in the fourteenth embodiment, and has a semicircular portion 17b-1 and a narrow-length portion 17b-2 joined at center portion of the chord of this semicircular portion 17b-1.

The foregoing two narrow-length portions 17a-2 and 17b-2 are structured to become narrower (i.e., the opening surface areas become smaller) moving away from the tip ends thereof.

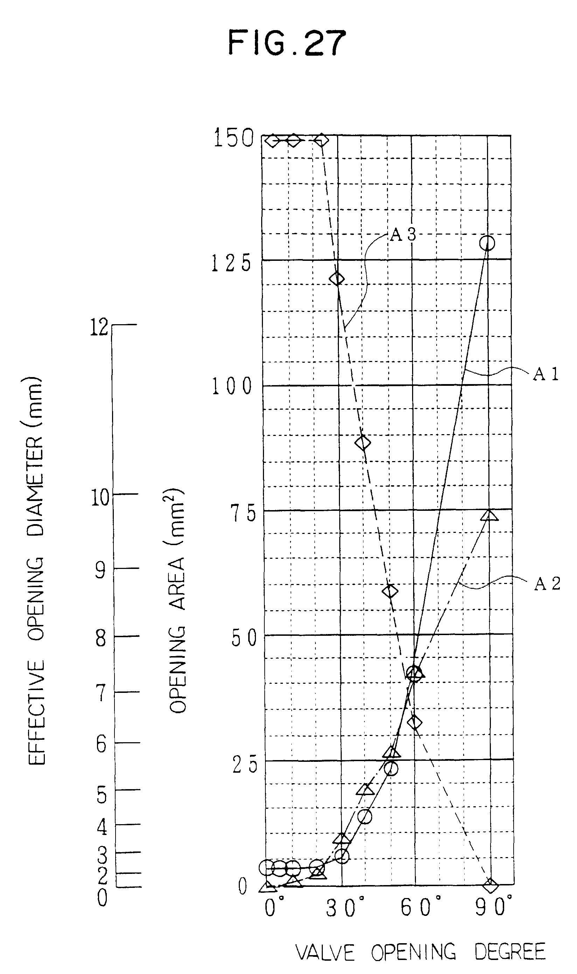

Accordingly, when the needle valve 17 has been operated by a minute amount from an opening degree of zero (e.g., to an opening degree of 10° in the example of FIGS. 26A-26G), the control passage 17b opens to the hot-water outlet pipe 20, the opening surface area to the bypass outlet pipe 21 decreases gradually as the degree of opening of the needle valve 17 increases thereafter, and when the degree of opening of the needle valve 17 reaches the maximum opening degree (i.e., 90° in the example of FIG. 27), or, in other words, when the needle valve 17 is set at a maximum heating position, the opening surface area of the control passage 17b and the bypass outlet pipe 21 becomes zero, and hot-water outflow to the bypass circuit 5 side is prevented. Simultaneously, the control passage 17a and the control passage 17b are respectively open with maximum opening surface areas to the hot-water inlet pipe 19 and the hot-water outlet pipe 20, and so maximum heating capacity can be assured.

FIG. 27 shows a situation wherein the opening surface area A1 of the control passage 17a and the hot-water inlet pipe 19, the opening surface area A2 of the control passage 17b and the hot-water outlet pipe 20, and the opening surface area A3 of the control passage 17b and the bypass outlet pipe 21 are changed by the degree of valve opening. The drawing corresponds to the above-mentioned FIGS. 7, 15, and 22.

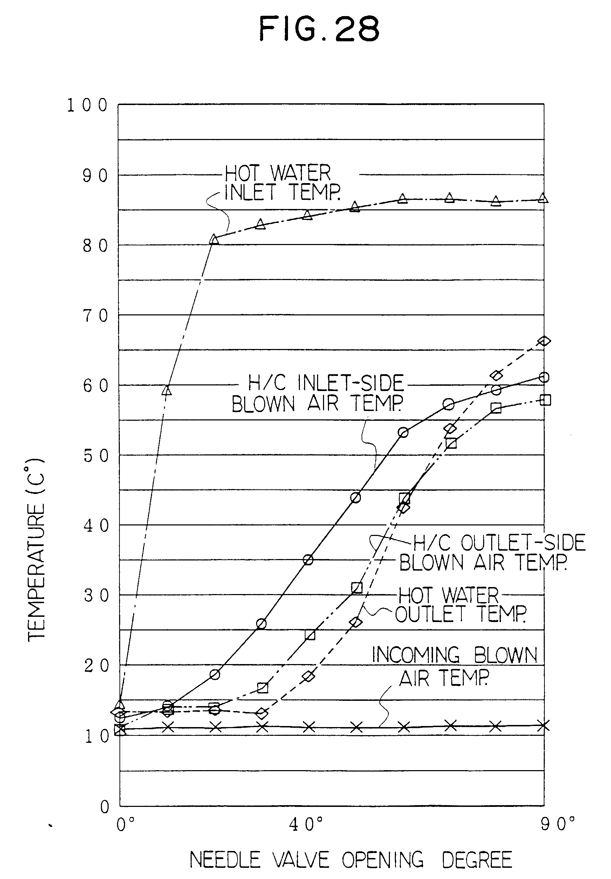

FIG. 28 shows temperature-control characteristics according to the foregoing fifteenth embodiment. As described above, the opening surface area A1 of the hot-water inlet pipe 19 and the control passage 17a of the needle valve 17 is maintained by the small hole 17a-3 at a uniform opening surface area in a predetermined range of the degree of opening of the needle valve 17 from zero, and any increase in the amount of hot water flowing into the heat exchanger 3 is suppressed, so in actual practice, the control characteristic curve of the blown-air temperature can have a significantly smaller slope than the corresponding characteristic curve of FIGS. 25A and 25B in the typically utilized temperature region of 15°C to 50°C.

For this reason, the ratio of change in blown-air temperature is markedly reduced with respect to valve opening degree, and regulation of blown-air temperature is facilitated.

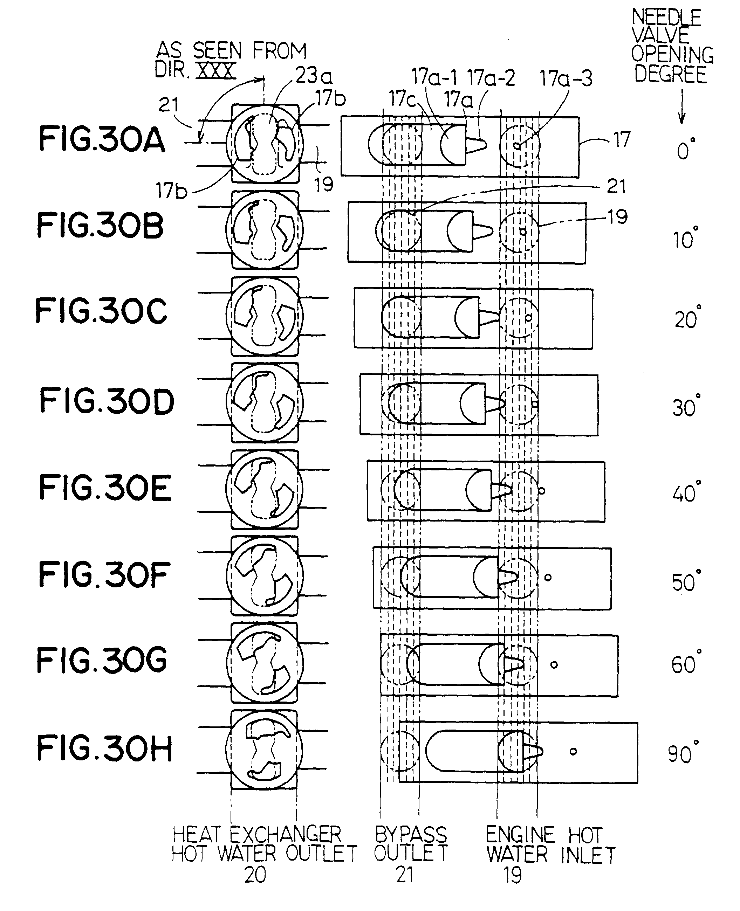

FIGS. 29A, 29B and 30A-30H show a sixteenth embodiment in which temperature control characteristics of small-slope (dormant) characteristics identical to the foregoing fifteenth embodiment are obtained by a different method. According to this present embodiment, a hot-water inlet pipe 19 and a seal member 24 are disposed on a side of a circumferential surface of the needle valve 17, and a bypass outlet pipe 21 is disposed at an opposite position with respect to the hot-water inlet pipe 19 and seal member 24.

Accordingly, a hot-water outlet pipe 20 and a seal member 23 are disposed on a bottom side of the needle valve 17. In addition to a semicircular portion 17a-1 and a narrow-length portion 17a-2, a small hole 17a-3 is provided in a control passage 17a formed in the needle valve 17, so that the opening surface area A1 of the hot-water inlet pipe 19 into which hot water flows from the engine 1 is thereby maintained by the small hole 17a-3 at a uniform opening surface area in a predetermined range of the degree of opening of the needle valve 17 from zero, similarly to the fifteenth embodiment. An increase in the amount of hot water flowing into the heat exchanger 3 when the valve degree of opening is small can thereby be suppressed.

Meanwhile, as shown in FIG. 30A, the opening surface area A2 of the hot-water outlet pipe 20 (connected to an inlet of the heat exchanger 3) disposed on the bottom side of the needle valve 17 is composed of a control passage 17b formed on the bottom of the needle valve 17 and a restricting hole portion 23a formed in the seal member 23 of the valve housing 8 side to exhibit changes similarly to the foregoing fifteenth embodiment.

That is to say, when the degree of opening of the needle valve 17 is zero, the opening surface area A2 of the hot-water outlet pipe 20 becomes zero, and when the needle valve 17 has been opened a minute amount (e.g., a degree of opening of 10° in the example of FIG. 30B) from a fully closed state, the hot-water outlet pipe 20 opens, and the opening surface area A2 of the hot-water outlet pipe 20 increases as the degree of opening of the needle valve 17 increases thereafter.

In the example of FIGS. 30A-30H, the control passage 17b formed on the bottom of the needle valve 17 has two substantially comma-shaped holes, and additionally the restricting hole portion 23a of the seal member 23 is substantially oblong with a center portion of narrowed width.

Additionally, a control passage 17c is formed continuously at a left-hand side of the control passage 17c of the needle valve 17 so that an opening surface area A3 of the bypass outlet pipe 21 exhibits changes similar to the fifteenth embodiment with respect to the valve degree of opening due to this control passage 17c.

According to the sixteenth embodiment, favorable temperature-control characteristics similar to the fifteenth embodiment and as indicated in FIG. 29 are obtained by having the above-described structure.

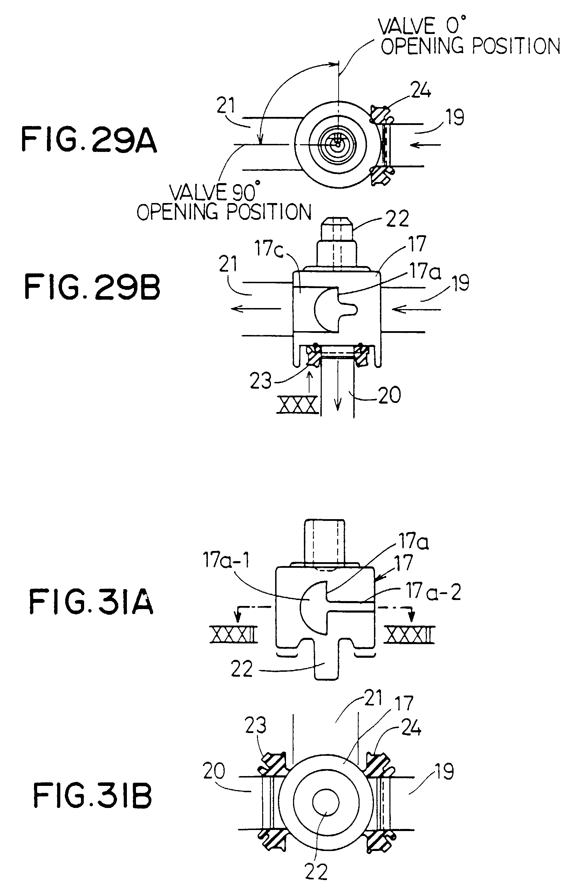

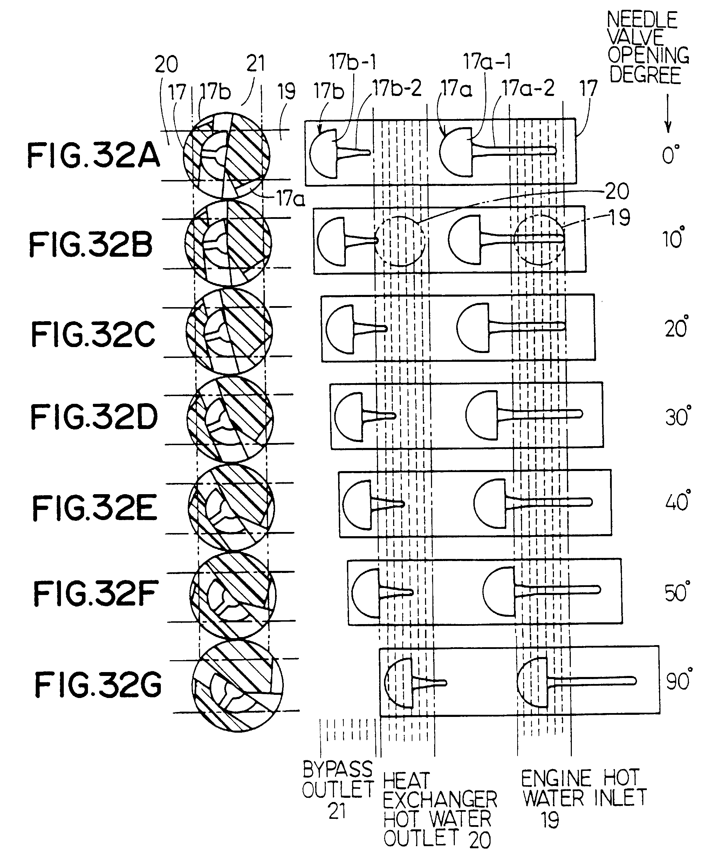

FIGS. 31A, 31B and 32A-32G indicate a seventeenth embodiment in which the small hole 17a-3 according to the foregoing fifteenth embodiment is eliminated in favor of a narrow-length portion 17a-2 of the control passage 17a having a uniform open width which has a length of a predetermined value or more.

Because of this, as shown in FIGS. 32A-32G, the opening surface area A1 of the hot-water inlet pipe 19 is maintained uniformly by the foregoing narrow-length portion 17a-2 during the interval until the degree of opening of the needle valve 17 reaches 30°.

Other features are similar to corresponding parts of the fifteenth embodiment.

Although the present invention has been fully described in connection with the preferred embodiments thereof with respect to the accompanying drawings, it is to be noted that various changes and modifications will become apparent to those skilled in the art. Such changes and modifications are to be understood as being included within the scope of the present invention as defined by the appended claims.

## Claims

1. A flow control valve (4) for controlling fluid flow from a fluid supply source (1) to a heat exchanger (3), said valve (4) comprising:
a valve housing (18) having a fluid inlet (19) connectable to a fluid discharge port of said fluid supply source (1), a fluid outlet (20) connectable to a fluid intake port of said heat exchanger (3), and a bypass port (21) connectable to a bypass path (5) bypassing said heat exchanger (3);
flow control means (17), disposed in said valve housing (18), for selectively controlling opening areas of said fluid inlet (19), said fluid outlet (20) and said bypass port (21) so that in a first position of said flow control means (17), said fluid inlet (19) and said fluid outlet (20) are closed or slightly opened and said bypass port (21) is open, and so that in a second position of said flow control means (17), said fluid inlet (19) and said fluid outlet (20) are open and said bypass port (21) is closed or slightly opened,
characterized in that
the control valve (4) is designed such that during a transition period from the first position to the second position of the flow control means (17), both of the opening areas of the fluid inlet (19) and the fluid outlet (20) are gradually increased and the opening area of the bypass port (21) is gradually reduced.

2. The valve of claim 1, wherein said flow control means (17) is a needle valve (17) having a rotor rotatably disposed within said valve housing (18) to selectively control said opening areas of said fluid inlet (19), said fluid outlet (20) and said bypass port (21).

3. The valve of claim 1, wherein said flow control means (17) is a needle valve (17) having a linearly reciprocating member (17) disposed within said valve housing (18) to selectively control said opening areas of said fluid inlet (19), said fluid outlet (20) and said bypass port (21).

4. The valve of claim 1, wherein said flow control means (17) includes a movable member having surface thereon defining control passages connecting said fluid inlet (19), said fluid outlet (20) and said bypass port (21).

5. The valve of claim 1, wherein said fluid control means (17) is further for providing fluid flow between said fluid inlet (19) and said bypass port (21) in said first and second positions.

6. The valve of claim 1, wherein said fluid control means (17) is further for selectively controlling opening areas of said fluid inlet (19), said fluid outlet (20) and said bypass port (21) by providing combinations of opening areas of said fluid inlet (19), said fluid outlet (20) and said bypass port (21), each of said combinations corresponding to an intermediate position of said fluid control means (17) between said first and second positions.

7. The valve of claim 6, wherein said fluid inlet (19) opening area and said fluid outlet (20) opening area in said combinations establish a predetermined relationship.

8. The valve of claim 7, wherein:
said fluid inlet (19) opening area is substantially uniform in combinations corresponding to positions of said flow control means (17) which are less than a predetermined distance from said first position;
said fluid inlet (19) opening area increases in combinations corresponding to positions of said flow control means (17) closer to said second position;
said fluid outlet (20) opening area permits fluid flow therethrough when said flow control means (17) is in a position other than said first position; and
said fluid outlet (20) opening area increases in combinations corresponding to positions of said flow control means (17) closer to said second position.

9. The valve of claim 8, wherein said fluid inlet (19) opening area and said fluid outlet (20) opening area are at their respective maxima when said flow control means (17) is in said second position.

10. The valve of claim 1, wherein said fluid inlet (19) and said fluid outlet (20) are coaxial.

11. The valve of claim 1, wherein longitudinal axes of said fluid inlet (19) and said bypass port (21) are substantially perpendicular.

12. The valve of claim 1, wherein longitudinal axes of said fluid inlet (19) and said bypass port (21) are substantially parallel.

13. The valve of claim 1, wherein longitudinal axes of said fluid inlet (19) and said bypass port (21) are skew to one another.

14. A heating apparatus comprising:
a heated fluid supply source (1) having a fluid discharge port;
a heat exchanger (3), having a fluid intake port, for exchanging heat between heated fluid from said heated fluid supply source (1) and an environmental gas, a fluid circuit being formed between said heated fluid supply source (1) and said heat exchanger (3),
a first bypass path (5) for bypassing fluid in said fluid circuit around said heat exchanger (3); and
a flow control valve (4) disposed in said fluid circuit and connected to said first bypass path (5), said flow control valve (4) including
a valve housing (18) having a fluid inlet (19) connectable to said fluid discharge port, a fluid outlet (20) connectable to said fluid intake port, and a bypass port (21) connectable to said first bypass path (5), and
flow control means (17), disposed in said valve housing (18), for selectively controlling opening areas of said fluid inlet (19), said fluid outlet (20) and said bypass port (21) so that in a first position of said flow control means (17), said fluid inlet (19) and said fluid outlet (20) are closed or slightly opened and said bypass port (21) is open, and so that in a second position of said flow control means (17), said fluid inlet (19) and said fluid outlet (20) are open and said bypass port (21) is closed or slightly opened,
characterized in that
the fluid supply source (1) is an engine of a vehicle and the heat exchanger (3) is provided for heating air to be blown in the passenger compartment of the vehicle, and
that the control valve (4) is designed such that during a transition period from the first position to the second position of the flow control means (17), both of the opening areas of the fluid inlet (19) and the fluid outlet (20) are gradually increased and the opening area of the bypass port (21) is gradually reduced.

15. The apparatus of claim 14, said first bypass path (5) including a pressure-responsive valve (6) which opens when pressure of heated fluid in said first bypass path (5) reaches a predetermined level.

16. The apparatus of claim 15, wherein said pressure-responsive valve (6) comprises:
a housing (25, 26) having a heated fluid inlet (35) and a heated fluid outlet (36), a portion of an inner surface of said housing (25, 26) defining a valve seat (33);
a needle valve (30) moving relative to said valve seat (33) responsive to pressure of said heated fluid in said first bypass path (5); and
a passage (37) connecting said heated fluid inlet (35) and said heated fluid outlet (36) independent of said needle valve (30) and valve seat (33).

17. The apparatus of claim 14, further comprising a second bypass path (5a) having an upstream end upstream of an upstream end of said first bypass path (5), said second bypass path (5a) being independent of said flow control valve.

18. The apparatus of claim 17, said first and second bypass paths (5, 5a) each including a pressure-responsive valve (6, 6a) which opens when pressure of heated fluid in its respective bypass path (5, 5a) reaches a predetermined level.

19. The apparatus of claim 14, further comprising:
a pressure-responsive valve (6) in said first bypass path (5) which opens when pressure of heated fluid in said first bypass path (5) reaches a predetermined level; and
a second, normally open bypass path (5a) disposed in said fluid circuit in parallel with said first bypass path (5).

20. Flow control valve according to claim 1 or heating apparatus according to claim 14, wherein the flow control means (17) controls, when the flow control means is in the first position, so that the fluid outlet (20) is fully closed and an opening area of the bypass port (21) is sufficiently larger than the opening area of the fluid inlet (19).

21. Flow control valve according to claim 1 or heating apparatus according to claim 14, wherein
the flow control valve (4) further includes valve drive means (16) for reciprocating the flow control means (17) to which an operation member (22) is connected,
two of the fluid inlet (19), the fluid outlet (20) and the bypass port (21) are disposed on a peripheral surface of the valve housing (18),
the remaining one of the fluid inlet, the fluid outlet and the bypass port is disposed in an axial direction at one end surface of the housing, and
said operation member (22) is disposed at the other end surface of the valve housing.

22. A flow control valve (4) for controlling fluid flow from a fluid supply source (1) to a heat exchanger (3), said valve (4) comprising:
a valve housing (18) having a fluid inlet (19) connectable to one of a fluid discharge port of said fluid supply source (1) and a fluid outlet port of said heat exchanger, a fluid outlet (20) connectable to one of a fluid intake port of said heat exchanger (3) and a fluid intake port of said fluid supply source, and a bypass port (21) connectable to a bypass path (5) bypassing said heat exchanger (3);
flow control means (17), disposed in said valve housing (18), for selectively controlling opening areas of said fluid inlet (19), said fluid outlet (20) and said bypass port (21) so that in a first position of said flow control means (17), said fluid inlet (19) and said fluid outlet (20) are closed or slightly opened and said bypass port (21) is open, and so that in a second position of said flow control means (17), said fluid inlet (19) and said fluid outlet (20) are open and said bypass port (21) is closed or slightly opened,
characterized in that
the control valve (4) is designed such that during a transition period from the first position to the second position of the flow control means (17), both of the opening areas of the fluid inlet (19) and the fluid outlet (20) are gradually increased and the opening area of the bypass port (21) is gradually reduced.

23. A heating apparatus comprising:
a heated fluid supply source (1) having a fluid discharge port;
a heat exchanger (3), having a fluid intake port, for exchanging heat between heated fluid from said heated fluid supply source (1) and an environmental gas, a fluid circuit being formed between said heated fluid supply source (1) and said heat exchanger (3),
a first bypass path (5) for bypassing fluid in said fluid circuit around said heat exchanger (3); and
a flow control valve (4) disposed in said fluid circuit and connected to said first bypass path (5), said flow control valve (4) including
a valve housing (18) having a fluid inlet (19) connectable to one of said fluid discharge port and a fluid outlet port of said heat exchanger, a fluid outlet (20) connectable to one of said fluid intake port and a fluid intake port of said fluid supply source, and a bypass port (21) connectable to said first bypass path (5), and
flow control means (17), disposed in said valve housing (18), for selectively controlling opening areas of said fluid inlet (19), said fluid outlet (20) and said bypass port (21) so that in a first position of said flow control means (17), said fluid inlet (19) and said fluid outlet (20) are closed or slightly opened and said bypass port (21) is open, and so that in a second position of said flow control means (17), said fluid inlet (19) and said fluid outlet (20) are open and said bypass port (21) is closed or slightly opened,
characterized in that
the fluid supply source (1) is an engine of a vehicle and the heat exchanger (3) is provided for heating air to be blown in the passenger compartment of the vehicle, and
that the control valve (4) is designed such that during a transition period from the first position to the second position of the flow control means (17), both of the opening areas of the fluid inlet (19) and the fluid outlet (20) are gradually increased and the opening area of the bypass port (21) is gradually reduced.

## Patentansprüche

1. Durchflußregelventil (4) zum Regeln eines Fluiddurchflusses von einer Fluidversorgungsquelle (1) zu einem Wärmetauscher (3), wobei das Ventil (4) aufweist:
Ein Ventilgehäuse (18) mit einem Fluideinlaß (19), der mit einer Fluidauslaßöffnung der Fluidversorgungsquelle (1) verbindbar ist, einem Fluidauslaß (20), der mit einer Fluidansaugöffnung des Wärmetauschers (3) verbindbar ist, und eine Umgehungsöffnung (21), die mit einem Umgehungspfad (5) verbindbar ist, welcher den Wärmetauscher (3) umgeht,
eine Durchflußsteuereinrichtung (17), die in dem Ventilgehäuse (18) angeordnet ist, um Öffnungsflächen des Fluideinlasses (19) des Fluidauslasses (20) und der Umgehungsöffnung (21) wahlweise derart zu steuern, daß in der ersten Position der Durchflußsteuereinrichtung (17) der Fluideinlaß (19) und der Fluidauslaß (20) geschlossen oder geringfügig geöffnet sind und die Umgehungsöffnung (21) offensteht, und derart, daß in einer zweiten Position der Durchflußsteuereinrichtung (17) der Fluideinlaß (19) und der Fluidauslaß (20) offenstehen und die Umgehungsöffnung (21) geschlossen oder geringfügig geöffnet ist,
dadurch gekennzeichnet, daß
das Regelventil (4) so ausgelegt ist, daß während einer Übergangsperiode von der ersten Position in die zweite Position der Durchflußsteuereinrichtung (17) sowohl die Öffnungsflächen des Fluideinlasses (19) wie des Fluidauslasses (20) allmählich vergrößert werden, und die Öffnungsfläche der Umgehungsöffnung (21) allmählich verringert wird.

2. Ventil nach Anspruch 1, wobei die Durchflußsteuereinrichtung (17) ein Nadelventil (17) mit einem Rotor ist, der in dem Ventilgehäuse (18) drehbar angeordnet ist, um die Öffnungsflächen des Fluideinlasses (19), des Fluidauslasses (20) und der Umgehungsöffnung (21) wahlweise zu steuern.

3. Ventil nach Anspruch 1, wobei die Durchflußsteuereinrichtung (17) ein Nadelventil (17) ist, das ein linear hin- und herlaufendes Element (17) aufweist, das in dem Ventilgehäuse (18) angeordnet ist, um die Öffnungsflächen des Fluideinlasses (19), des Fluidauslasses (20) und der Umgehungsöffnung (21) wahlweise zu steuern.

4. Ventil nach Anspruch 1, wobei die Durchflußsteuereinrichtung (17) ein bewegliches Element mit einer Oberfläche darauf aufweist, welche Steuerdurchlässe festlegt, welche den Fluideinlaß (19), den Fluidauslaß (20) und die Umgehungsöffnung (21) verbinden.

5. Ventil nach Anspruch 1, wobei die Fluidsteuereinrichtung (17) außerdem zum Bereitstellen eines Fluidstroms zwischen dem Fluideinlaß (19) und der Umgehungsöffnung (21) in den ersten und zweiten Positionen dient.

6. Ventil nach Anspruch 1, wobei die Fluidsteuereinrichtung (17) außerdem zum wahlweisen Steuern der Öffnungsflächen des Fluideinlasses (19), des Fluidauslasses (20) und der Umgehungsöffnung (21) dient, indem diese Kombinationen von Öffnungsflächen des Fluideinlasses (19), des Fluidauslasses (20) und der Umgehungsöffnung (21) bereitstellt, wobei jede dieser Kombinationen einer Zwischenposition der Fluidsteuereinrichtung (17) zwischen den ersten und zweiten Positionen entspricht.

7. Ventil nach Anspruch 6, wobei die Öffnungsfläche des Fluideinlasses (19) und die Öffnungsfläche des Fluidauslasses (20) in den Kombinationen eine vorbestimmte Beziehung festlegen.

8. Ventil nach Anspruch 7, wobei:
Die Öffnungsfläche des Fluideinlasses (19) im wesentlichen gleichmäßig in Kombinationen entsprechend Positionen der Fluidsteuereinrichtung (17) ist, die weniger als eine vorbestimmte Distanz von der ersten Position entfernt sind,
die Öffnungsfläche des Fluideinlasses (19) in Kombinationen entsprechend Positionen der Fluidsteuereinrichtung (17) zunimmt, die näher an der zweiten Position liegen,
die Öffnungsfläche des Fluidauslasses (20) einen Fluidstrom durch ihn hindurch ermöglicht, wenn die Durchflußsteuereinrichtung (17) sich in einer anderen Position als der ersten Position befindet, und
die Öffnungsfläche des Fluidauslasses (20) in Kombinationen entsprechend Positionen der Durchflußsteuereinrichtung (17) zunimmt, die näher an der zweiten Position liegen.

9. Ventil nach Anspruch 8, wobei die Öffnungsfläche des Fluideinlasses (19) und die Öffnungsfläche des Fluidauslasses (20) ihre jeweiligen Maxima einnehmen, wenn die Durchflußsteuereinrichtung (17) sich in der zweiten Position befindet.

10. Ventil nach Anspruch 1, wobei der Fluideinlaß (19) und der Fluidauslaß (20) koaxial angeordnet sind.

11. Ventil nach Anspruch 1, wobei Längsachsen des Fluideinlasses (19) und der Umgehungsöffnung (21) im wesentlichen senkrecht angeordnet sind.

12. Ventil nach Anspruch 1, wobei Längsachsen des Fluideinlasses (19) und der Umgehungsöffnung (21) im wesentlichen parallel angeordnet sind.

13. Ventil nach Anspruch 1, wobei Längsachsen des Fluideinlasses (19) und der Umgehungsöffnung (21) schräg zueinander verlaufen.

14. Heizvorrichtung, aufweisend:
Eine Versorgungsquelle (1) für erwärmtes Fluid mit einer Fluidaustragöffnung,
einen Wärmetauscher (3) mit einer Fluidauslaßöffnung zum Tauschen von Wärme zwischen erwärmtem Fluid von der Versorgungsquelle (1) für erwärmtes Fluid und einem Umgebungsgas, wobei zwischen der Versorgungsquelle (1) für erwärmtes Fluid und dem Wärmetauscher (3) eine Fluidleitung bzw. ein Fluidkreislauf gebildet ist,
einen ersten Umgehungspfad (5) zum Umleiten von Fluid in der Fluidleitung um den Wärmetauscher (3), und
ein Durchflußregelventil (4), das in der Fluidleitung bzw. dem Fluidkreislauf angeordnet und mit dem ersten Umgehungspfad (5) verbunden ist, wobei das Fluidregelventil (4) aufweist:
Ein Ventilgehäuse (18) mit einem Fluideinlaß (19), der mit einer Fluidauslaßöffnung der Fluidversorgungsquelle (1) verbindbar ist, einem Fluidauslaß (20), der mit der Fluidansaugöffnung verbindbar ist, und einer Umgehungsöffnung (21), die mit dem ersten Umgehungspfad (5) verbindbar ist, eine Durchflußsteuereinrichtung (17), die in dem Ventilgehäuse (18) angeordnet ist, um Öffnungsflächen des Fluideinlasses (19) des Fluidauslasses (20) und der Umgehungsöffnung (21) wahlweise derart zu steuern, daß in einer ersten Position der Durchflußsteuereinrichtung (17) der Fluideinlaß (19) und der Fluidauslaß (20) geschlossen oder geringfügig geöffnet sind und die Umgehungsöffnung (21) offensteht, und derart, daß in einer zweiten Position der Durchflußsteuereinrichtung und der Fluideinlaß (19) und der Fluidauslaß (20) offen sind und die Umgehungsöffnung (21) geschlossen oder geringfügig geöffnet ist,
dadurch gekennzeichnet, daß
die Fluidversorgungsquelle (1) ein Motor eines Fahrzeugs ist und der Wärmetauscher (3) zum Erwärmen von Luft vorgesehen ist, die in die Fahrgastzelle des Fahrzeugs geblasen werden soll, und
daß das Regelventil (4) dazu ausgelegt ist, daß während einer Übergangsperiode von der ersten Position in die zweite Position der Durchflußsteuereinrichtung (17) sowohl die Öffnungsflächen des Fluideinlasses (19) wie des Fluidauslasses (20) allmählich größer werden und die Öffnungsfläche der Umgehungsöffnung (21) allmählich verringert wird.

15. Vorrichtung nach Anspruch 14, wobei der erste Umgehungspfad (5) ein druckempfindliches Ventil (6) umfaßt, welches öffnet, wenn der Druck des erwärmten Fluids in dem ersten Umgehungspfad (5) ein vorbestimmtes Niveau erreicht.

16. Vorrichtung nach Anspruch 15, wobei das druckempfindliche Ventil (6) aufweist:
Ein Gehäuse (25, 26) mit einem Einlaß (35) für das erwärmte Fluid und einem Auslaß (36) für das erwärmte Fluid, wobei ein Abschnitt einer Innenfläche des Gehäuses (25, 26) einen Ventilsitz (33) festlegt,
ein Nadelventil (30), welches sich relativ zu dem Ventilsitz (33) ansprechend auf den Druck des erwärmten Fluids in dem ersten Umgehungspfad (5) bewegt, und
einen Durchlaß (37), welcher den Einlaß (35) für das erwärmte Fluid und den Auslaß (36) für das erwärmte Fluid unabhängig von dem Nadelventil (30) und dem Ventilsitz (33) verbindet.

17. Vorrichtung nach Anspruch 14, außerdem aufweisend einen zweiten Umgehungspfad (5a) mit einem stromaufwärtigen Ende stromaufwärts von einem stromaufwärtigen Ende des ersten Umgehungspfads (5), wobei der zweite Umgehungspfad (5a) unabhängig von dem Durchflußregelventil ist.

18. Vorrichtung nach Anspruch 17, wobei die ersten und zweiten Umgehungspfade (5, 5a) jeweils ein druckempfindliches Ventil (6, 6a) aufweisen, welches öffnet, wenn der Druck des erwärmten Fluids in seinem jeweiligen Umgehungspfad (5, 5a) ein vorbestimmtes Niveau erreicht.

19. Vorrichtung nach Anspruch 14, außerdem aufweisend:
Ein druckempfindliches Ventil (6) in dem ersten Umgehungspfad (5), welches öffnet, wenn der Druck des erwärmten Fluids in dem ersten Umgehungspfad (5) ein vorbestimmtes Niveau erreicht, und
einen zweiten normalerweise offenen Umgehungspfad (5a), der in der Fluidleitung parallel zu dem ersten Umgehungspfad (5) angeordnet ist.

20. Durchflußregelventil nach Anspruch 1 oder Heizvorrichtung nach Anspruch 14, wobei die Durchflußsteuereinrichtung (17) dann, wenn die Durchflußsteuereinrichtung sich in der ersten Position befindet, derart steuert, daß der Fluidauslaß (20) vollständig geschlossen ist und eine Öffnungsfläche der Umgehungsöffnung (21) ausreichend größer als eine Öffnungsfläche des Fluideinlasses (19) ist.

21. Durchflußregelventil nach Anspruch 1 oder Heizvorrichtung nach Anspruch 14, wobei
das Durchflußregelventil (4) außerdem eine Ventilantriebseinrichtung (16) zum Hin- und Herbewegen der Durchflußsteuereinrichtung (17) umfaßt, mit welcher ein Betätigungselement (22) verbunden ist,
zwei Elemente, umfassend den Fluideinlaß (19), den Fluidauslaß (20) und die Umgehungsöffnung (21) auf einer Umfangsfläche des Ventilgehäuses (18) angeordnet sind,
das verbleibende eine Element, umfassend den Fluideinlaß, den Fluidauslaß oder die Umgehungsöffnung in einer axialen Richtung auf einer Endfläche des Gehäuses angeordnet ist, und
das Betätigungselement (22) an der anderen Endfläche des Ventilgehäuses angeordnet ist.

22. Durchflußregelventil (4) zum Regeln eines Fluiddurchflusses von einer Fluidversorgungsquelle (1) zu einem Wärmetauscher (3), wobei das Ventil (4) aufweist:
Ein Ventilgehäuse (18) mit einem Fluideinlaß (19), der mit einem der Elemente, umfassend eine Fluidauslaßöffnung der Fluidversorgungsquelle (1) und eine Fluidauslaßöffnung des Wärmetauschers verbindbar ist, einem Fluidauslaß (20), der mit einem der Elemente, umfassend eine Fluidansaugöffnung des Wärmetauschers und eine Fluideinlaßöffnung der Fluidversorgungsquelle verbindbar ist, und einer Umgehungsöffnung (21), die mit einem Umgehungspfad (5) verbindbar ist, der den Wärmetauscher (3) umgeht,
eine Durchflußsteuereinrichtung (17), die in dem Ventilgehäuse (18) angeordnet ist, um Öffnungsflächen des Fluideinlasses (19) des Fluidauslasses (20) und der Umgehungsöffnung (21) wahlweise derart zu steuern, daß in einer ersten Position der Durchflußsteuereinrichtung (17) der Fluideinlaß (19) und der Fluidauslaß (20) geschlossen oder geringfügig geöffnet sind und die Umgehungsöffnung (21) offensteht, und derart, daß in einer zweiten Position der Durchflußsteuereinrichtung (17), der Fluideinlaß (19) und der Fluidauslaß (20) offen sind und die Umgehungsöffnung (21) geschlossen oder geringfügig geöffnet ist,
dadurch gekennzeichnet, daß
das Regelventil (4) so ausgelegt ist, daß während einer Übergangsperiode von der ersten Position in die zweite Position der Durchflußsteuereinrichtung (17) sowohl die Öffnungsflächen des Fluideinlasses (19) wie des Fluidauslasses (20) allmählich vergrößert werden, und die Öffnungsfläche der Umgehungsöffnung (21) allmählich verringert wird.

23. Heizvorrichtung, aufweisend:
Eine Versorgungsquelle (1) für erwärmtes Fluid mit einer Fluidauslaßöffnung,
einen Wärmetauscher (3) mit einer Fluideinlaßöffnung zum Tauschen von Wärme zwischen erwärmtem Fluid von der Versorgungsquelle (1) für erwärmtes Fluid und einem Umgebungsgas, wobei zwischen der Versorgungsquelle (1) für erwärmtes Fluid und dem Wärmetauscher (3) eine Fluidleitung bzw. ein Fluidkreislauf gebildet ist,
einen ersten Umgehungspfad (5) zum Umleiten von Fluid in der Fluidleitung um den Wärmetauscher (3), und
ein Durchflußregelventil (4), das in der Fluidleitung bzw. dem Fluidkreislauf angeordnet und mit dem ersten Umgehungspfad (5) verbunden ist, wobei das Fluidregelventil (4) aufweist:
Ein Ventilgehäuse (18) mit einem Fluideinlaß (19), der mit einem der Elemente, umfassend die Fluidauslaßöffnung und eine Fluidauslaßöffnung des Wärmetauschers verbindbar ist, einem Fluidauslaß (20), der mit einem der Elemente, umfassend die Fluidansaugöffnung und eine Fluideinlaßöffnung der Fluidversorgungsquelle verbindbar ist, und eine Umgehungsöffnung (21), die mit einem Umgehungspfad (5) verbindbar ist, welche den Wärmetauscher (3) umgeht,
eine Durchflußsteuereinrichtung (17), die in dem Ventilgehäuse (18) angeordnet ist, um Öffnungsflächen des Fluideinlasses (19) des Fluidauslasses (20) und der Umgehungsöffnung (21) wahlweise derart zu steuern, daß in der ersten Position der Durchflußsteuereinrichtung (17) der Fluideinlaß (19) und der Fluidauslaß (20) geschlossen oder geringfügig geöffnet sind und die Umgehungsöffnung (21) offensteht, und derart, daß in einer zweiten Position der Durchflußsteuereinrichtung (17) der Fluideinlaß (19) und der Fluidauslaß (20) offen sind und die Umgehungsöffnung (21) geschlossen oder geringfügig geöffnet ist,
dadurch gekennzeichnet, daß
die Fluidversorgungsquelle (1) ein Motor eines Fahrzeugs ist und der Wärmetauscher (3) zum Erwärmen von Luft vorgesehen ist, die in die Fahrgastzelle des Fahrzeugs geblasen werden soll, und
daß das Regelventil (4) dazu ausgelegt ist, daß während einer Übergangsperiode von der ersten Position in die zweite Position der Durchflußsteuereinrichtung (17) sowohl die Öffnungsflächen des Fluideinlasses (19) wie des Fluidauslasses (20) allmählich größer werden und die Öffnungsfläche der Umgehungsöffnung (21) allmählich verringert wird.

## Revendications

1. Robinet de régulation de débit (4) pour commander l'écoulement d'un fluide entre une source d'alimentation en fluide (1) et un échangeur de chaleur (3), ledit robinet (4) comprenant :
un logement de robinet (18) ayant une entrée de fluide (19) pouvant être connectée à un orifice de décharge de fluide de ladite source d'alimentation en fluide (1), une sortie de fluide (20) pouvant être connectée à un orifice d'admission de fluide dudit échangeur de chaleur (3), et un orifice de dérivation (21) pouvant être connecté à un trajet de dérivation (5) contournant ledit échangeur de chaleur (3);
un moyen de commande de débit (17) disposé dans ledit logement de robinet (18), pour commander sélectivement les aires d'ouverture de ladite entrée de fluide (19), de ladite sortie de fluide (20) et dudit orifice de dérivation (21) de sorte que, dans une première position dudit moyen de commande de débit (17), ladite entrée de fluide (19) et ladite sortie de fluide (20) sont fermées ou légèrement ouvertes et ledit orifice de dérivation (21) est ouvert, et que, dans une seconde position dudit moyen de commande de débit (17), ladite entrée de fluide (19) et ladite sortie de fluide (20) sont ouvertes et ledit orifice de dérivation (21) est fermé ou légèrement ouvert,
caractérisé en ce que :
le robinet de commande (4) est conçu de façon que pendant une période de transition entre la première position et la seconde position du moyen de commande de débit (17), les aires d'ouverture de l'entrée de fluide (19) et de la sortie de fluide (20) sont progressivement augmentées et l'aire d'ouverture de l'orifice de dérivation (21) est progressivement réduite.

2. Robinet selon la revendication 1, dans lequel ledit moyen de commande de débit (17) est une soupape à aiguille (17) ayant un rotor disposé en rotation à l'intérieur dudit logement de robinet (18) pour commander sélectivement lesdites aires d'ouverture de ladite entrée de fluide (19), de ladite sortie de fluide (20) et dudit orifice de dérivation (21).

3. Robinet selon la revendication 1, dans lequel ledit moyen de commande de débit (17) est une soupape à aiguille (17) comportant un élément animé d'un mouvement de va-et-vient linéaire (17) qui est disposé à l'intérieur dudit logement de robinet (18) de manière à commander sélectivement lesdites aires d'ouverture de ladite entrée de fluide (19), de ladite sortie de fluide (20) et dudit orifice de dérivation (21).

4. Robinet selon la revendication 1, dans lequel ledit moyen de commande de débit (17) comprend un élément mobile ayant sur son dessus une surface qui définit des passages de commande reliant ladite entrée de fluide (19), ladite sortie de fluide (20) et ledit orifice de dérivation (21).

5. Robinet selon la revendication 1, dans lequel ledit moyen de commande de fluide (17) sert en outre à fournir un écoulement de fluide entre ladite entrée de fluide (19) et ledit orifice de dérivation (21) dans lesdites première et seconde positions.

6. Robinet selon la revendication 1, dans lequel ledit moyen de commande de fluide (17) sert en outre à commander sélectivement les aires d'ouverture de ladite entrée de fluide (19), de ladite sortie de fluide (20) et dudit orifice de dérivation (21) en fournissant des combinaisons des aires d'ouverture de ladite entrée de fluide (19), de ladite sortie de fluide (20) et dudit orifice de dérivation (21), chacune desdites combinaisons correspondant à une position intermédiaire dudit moyen de commande de fluide (21) entre lesdites première et seconde positions.

7. Robinet selon la revendication 6, dans lequel l'aire d'ouverture de ladite entrée de fluide (19) et l'aire d'ouverture de ladite sortie de fluide (20) dans lesdites combinaisons établissent une relation prédéterminée.

8. Robinet selon la revendication 7, dans lequel :
l'aire d'ouverture de ladite entrée de fluide (19) est sensiblement uniforme dans des combinaisons correspondant à des positions dudit moyen de commande de débit (17) qui sont inférieures à une distance prédéterminée par rapport à ladite première position;
l'aire d'ouverture de ladite entrée de fluide (19) croît dans des combinaisons correspondant à des positions dudit moyen de commande de débit (17) proches de ladite seconde position;
l'aire d'ouverture de ladite sortie de fluide (20) permet sa traversée par l'écoulement du fluide lorsque ledit moyen de commande de débit (17) se trouve dans une position autre que ladite première position; et
l'aire d'ouverture de ladite sortie de fluide (20) croît dans des combinaisons correspondant à des positions dudit moyen de commande de débit (17) proches de ladite seconde position.

9. Robinet selon la revendication 8, dans lequel l'aire d'ouverture de ladite entrée de fluide (19) et l'aire d'ouverture de ladite sortie de fluide (20) sont à leur maxima respectif lorsque ledit moyen de commande de débit (17) est dans ladite seconde position.

10. Robinet selon la revendication 1, dans lequel ladite entrée de fluide (19) et ladite sortie de fluide (20) sont coaxiales.

11. Robinet selon la revendication 1, dans lequel les axes longitudinaux de ladite entrée de fluide (19) et dudit orifice de dérivation (21) sont sensiblement perpendiculaires.

12. Robinet selon la revendication 1, dans lequel les axes longitudinaux de ladite entrée de fluide (19) et dudit orifice de dérivation (21) sont sensiblement parallèles.

13. Robinet selon la revendication 1, dans lequel les axes longitudinaux de ladite entrée de fluide (19) et dudit orifice de dérivation (21) sont obliques l'un par rapport à l'autre.

14. Appareil de chauffage comprenant :
une source d'alimentation en fluide chauffé (1) ayant un orifice de décharge de fluide;
un échangeur de chaleur (3), ayant un orifice d'admission de fluide pour échanger la chaleur entre le fluide chauffé provenant de la source d'alimentation en fluide chauffé (1) et un gaz environnant, un circuit de fluide étant formé entre ladite source d'alimentation en fluide chauffé (1) et ledit échangeur de chaleur (3),
un premier trajet de dérivation (5) pour dériver le fluide du circuit de fluide afin de contourner ledit échangeur de chaleur (3); et
un robinet de régulation de débit (4) disposé dans ledit circuit de fluide et connecté audit premier trajet de dérivation (5), ledit robinet de régulation de débit (4) comprenant :
un logement de robinet (18) ayant une entrée de fluide (19) pouvant être connecté audit orifice de décharge de fluide, une sortie de fluide (20) pouvant être connectée audit orifice d'admission de fluide, et un orifice de dérivation (21) pouvant être connecté audit premier trajet de dérivation (5), et
un moyen de commande de débit (17), disposé dans ledit logement de robinet (18), pour commander sélectivement les aires d'ouverture de ladite entrée de fluide (19), de ladite sortie de fluide (20) et dudit orifice de dérivation (21) de façon que, dans une première position dudit moyen de commande de débit (17), ladite entrée de fluide (19) et ladite sortie de fluide (20) soient fermées ou légèrement ouvertes et que ledit orifice de dérivation (21) soit ouvert, et que, dans une seconde position dudit moyen de commande de débit (17), ladite entrée de fluide (19) et ladite sortie de fluide (20) soient ouvertes et ledit orifice de dérivation (21) soit fermé ou légèrement ouvert,
caractérisé en ce que :
la source d'alimentation en fluide (1) est un moteur de véhicule et l'échangeur de chaleur (3) est fourni pour chauffer l'air devant être soufflé dans le compartiment des passagers du véhicule, et
en ce que la soupape de commande (4) est conçue de façon que, pendant une période de transition entre la première position et la seconde position du moyen de commande de débit (17), les aires d'ouverture de l'entrée de fluide (19) et de la sortie de fluide (20) augmentent progressivement et l'aire d'ouverture de l'orifice de dérivation (21) diminue progressivement.

15. Appareil selon la revendication 14, ledit premier trajet de dérivation (5) comprenant une soupape sensible à la pression (6) qui s'ouvre lorsque la pression du fluide chauffé dans ledit premier trajet de dérivation (5) atteint une valeur prédéterminée.

16. Appareil selon la revendication 15, dans lequel ladite soupape sensible à la pression (6) comprend :
un logement (25, 26) ayant une entrée de fluide chauffé (35) et une sortie de fluide chauffé (36), une partie de la surface intérieure dudit logement (25, 26) définissant un siège de soupape (33);
une soupape à aiguille (30) se déplaçant par rapport audit siège de soupape (33) en réponse à la pression dudit fluide chauffé présent dans ledit premier trajet de dérivation (5); et
un passage (37) connectant ladite entrée de fluide chauffé (35) et ladite sortie de fluide chauffé (36) indépendamment de ladite soupape à aiguille (30) et du siège de soupape (33).

17. Appareil selon la revendication 14, comprenant en outre un second trajet de dérivation (5a) ayant une extrémité amont en amont dudit premier trajet de dérivation (5), ledit second trajet de dérivation (sa) étant indépendant dudit robinet de régulation de débit.

18. Appareil selon la revendication 17, lesdits premier et second trajets de dérivation (5, 5a) comprenant chacun une soupape sensible à la pression (6, 6a) qui s'ouvre lorsque la pression du fluide chauffé présent dans son trajet respectif de dérivation (5, 5a) atteint une valeur prédéterminée.

19. Appareil selon la revendication 14, comprenant en outre :
une soupape sensible à la pression (6) dans ledit premier trajet de dérivation (5) qui s'ouvre lorsque la pression du fluide chauffé présent dans ledit premier trajet de dérivation (5) atteint une valeur prédéterminée; et
un second trajet de dérivation normalement ouvert (5a) dispose dans ledit circuit de fluide en parallèle avec ledit premier trajet de dérivation (5).

20. Robinet selon la revendication 1 ou appareil de chauffage selon la revendication 14, où le moyen de commande de débit (17) procède à une commande telle que, lorsque le moyen de commande de débit se trouve dans la première position, la sortie de fluide (20) soit entièrement fermée et l'aire d'ouverture de l'orifice de dérivation (21) soit suffisamment supérieure à l'aire d'ouverture de l'entrée de fluide (19).

21. Robinet de régulation de débit selon la revendication 1 ou appareil de chauffage selon la revendication 14, où
le robinet de régulation de débit (4) comprend en outre un moyen d'entraînement de robinet (16) pour animer d'un mouvement de va-et-vient le moyen de commande de débit (17) auquel un élément opérationnel (22) est connecté,
deux des entrées de fluide (19), sortie de fluide (20) et orifice de dérivation (21) sont disposées sur la surface périphérique du logement de robinet (18),
l'autre de l'entrée de fluide, de la sortie de fluide et de l'orifice de dérivation est disposée dans une direction axiale à une surface d'extrémité du logement, et
ledit élément opérationnel (22) est disposé à l'autre surface d'extrémité du logement du robinet.

22. Robinet de régulation de débit (4) pour commander l'écoulement d'un fluide entre une source d'alimentation en fluide (1) et un échangeur de chaleur (3), ledit robinet (4) comprenant :
un logement de robinet (18) ayant une entrée de fluide (19) pouvant être connectée à l'un d'un orifice de décharge de fluide de ladite source d'alimentation en fluide (1) et d'un orifice de sortie de fluide dudit échangeur de chaleur, une sortie de fluide (20) pouvant être connectée à l'un d'un orifice d'admission de fluide dudit échangeur de chaleur (3) et d'un orifice d'admission de fluide de ladite source d'alimentation en fluide et un orifice de dérivation (21) pouvant être connecté à un trajet de dérivation (5) contournant ledit échangeur de chaleur (3);
un moyen de commande de débit (17), disposé dans ledit logement de robinet (18), afin de commander sélectivement les aires d'ouverture de ladite entrée de fluide (19), de ladite sortie de fluide (20) et dudit orifice de dérivation (21) de façon que, dans une première position dudit moyen de commande de débit (17), ladite entrée de fluide (19) et ladite sortie de fluide (20) soient fermées ou légèrement ouvertes et que ledit orifice de dérivation (21) soit ouvert, et que, dans une seconde position dudit moyen de commande de débit (17), ladite entrée de fluide (19) et ladite sortie de fluide (20) soient ouvertes et que ledit orifice de dérivation (21) soit fermé ou légèrement ouvert,
caractérisé en ce que :
le robinet de commande (4) est conçu de façon que, pendant une période de transition entre la première position et la seconde position du moyen de commande de débit (17), les aires d'ouverture de l'entrée de fluide (19) et de la sortie de fluide (20) soient progressivement accrues et l'aire d'ouverture de l'orifice de dérivation (21) soit progressivement réduite.

23. Appareil de chauffage comprenant :
une source d'alimentation en fluide chauffé (1) ayant un premier orifice de décharge de fluide;
un échangeur de chaleur (3), ayant un orifice d'admission de fluide pour échanger la chaleur entre le fluide chauffé provenant de ladite source d'alimentation en fluide chauffé (1) et un gaz environnant, un circuit de fluide étant formé entre ladite source d'alimentation en fluide chauffé (1) et ledit échangeur de chaleur (3),
un premier trajet de dérivation (5) pour faire passer le fluide dudit circuit de fluide autour dudit échangeur de chaleur (3); et
un robinet de régulation de débit (4) disposé dans ledit circuit de fluide et connecté audit premier trajet de dérivation (5), ledit robinet de régulation de débit (4) comportant :
un logement de robinet (18) ayant une première entrée de fluide (19) pouvant être connectée à l'un dudit orifice de décharge de fluide, d'un orifice de sortie de fluide dudit échangeur de chaleur, une sortie de fluide (20) pouvant être connectée à l'un dudit orifice d'admission de fluide et d'un orifice d'admission de fluide de ladite source d'alimentation en fluide, et un orifice de dérivation (21) pouvant être connecté audit premier trajet de dérivation (5), et
un moyen de commande de débit (17), disposé dans ledit logement de robinet (18), pour commander sélectivement les aires d'ouverture de ladite entrée de fluide (19), de ladite sortie de fluide (20) et dudit orifice de dérivation (21) de façon que, dans une première position dudit moyen de commande de débit (17), ladite entrée de fluide (19) et ladite sortie de fluide (20) soient fermées ou légèrement ouvertes et ledit orifice de dérivation (21) soit ouvert, et que, dans une seconde position dudit moyen de commande de débit (17), ladite entrée de fluide (19) et ladite sortie de fluide (20) soient ouvertes et ledit orifice de dérivation (21) soit fermé ou légèrement ouvert,
caractérisé en ce que :
la source d'alimentation en fluide (1) est un moteur de véhicule et l'échangeur de chaleur (3) est fourni pour chauffer l'air devant être soufflé dans le compartiment des passagers du véhicule, et
en ce que le robinet (4) est conçu pour que pendant une période de transition entre la première position et la seconde position du moyen de commande de débit (17), les aires d'ouverture de l'entrée de fluide (19) et de la sortie de fluide (20) soient progressivement augmentées et l'aire d'ouverture de l'orifice de dérivation (21) soit progressivement réduite.
